# EUROPEAN PATENT SPECIFICATION

(11) **EP 4 166 722 B1**
(45) Date of publication and mention of the grant of the patent: **26.11.2025**
(21) Application number: 22199980.8
(22) Date of filing: 06.10.2022
(51) Int. Cl.: E02B 17/00, B63B 27/30, B63B 35/00

(54) **METHOD FOR DISASSEMBLING OFFSHORE STRUCTURE**
VERFAHREN ZUR DEMONTAGE EINER OFFSHORE-STRUKTUR
PROCÉDÉ DE DÉMONTAGE D'UNE STRUCTURE EN MER

(30) Priority: 13.10.2021 JP 2021168036
(43) Date of publication of application: 19.04.2023
(73) Proprietor: Mitsubishi Heavy Industries, Ltd., Tokyo 1008332 (JP)
(72) Inventor: YUGE, Atsushi, Tokyo, 1008332 (JP); NISHIGAKI, Makoto, Tokyo, 1008332 (JP); KANEMASU, Masayuki, Tokyo, 1008332 (JP); OKUDA, Akihisa, Tokyo, 1008332 (JP)
(74) Representative: Studio Torta S.p.A.

(56) References cited:
- EP-A1- 3 674 199
- US-A- 3 835 800
- US-A1- 2004 069 103

## Description

### TECHNICAL FIELD

The present disclosure relates to a method for disassembling an offshore structure provided with a tower of various facilities including an observation facility, a communication facility, an illuminating facility, a mining facility, a power generation facility, and the like (e.g., a meteorological tower, a transmission tower, a lighthouse, or an offshore wind turbine). The present application claims priority based on Japanese Patent Application No. 2021-168036 filed on October 13, 2021, with the Japanese Patent Office.

### BACKGROUND ART

Patent Document 1 discloses a method for safely demolishing a taut mooring type floating body for mooring a floating structure, in relation to an offshore wind turbine provided with a floating structure. In this method, water is injected into a water injection part for submergence which is provided for the floating structure to submerge the floating structure, and the mooring cable is cut in a loosened state, thereby ensuring safety.

Patent Document 2 discloses, as a method for disassembling a wind turbine without building a scaffold, a method of disassembling a tower sequentially from the top, using a crane apparatus disposed inside the tower of the wind turbine.

Patent Document 3, which is regarded useful to understand the invention, discloses a barge for decommissioning offshore structures.

### Citation List

### Patent Literature

Patent Document 1: JP2020-23233A
Patent Document 2: WO2019/116511A
Patent Document 3: EP 3 674 199 A1

### SUMMARY

The invention is defined by claim 1. Preferred embodiments of the invention follow from the dependent claims.

The inventors of the present invention have been researching, as a method for disassembling an offshore structure provided with a tower, a method of disassembling an offshore structure by cutting the root part of the tower by an explosive or a laser and then bringing down the body of the offshore structure (the part above the cutting position of the offshore structure) before disassembling, in order to minimize high place works. However, when the body of the offshore structure is to be collapsed, the body may sink under the sea where recovery is not possible.

In view of the above, an object of at least one embodiment of the present disclosure is to provide a method for disassembling an offshore structure whereby it is possible to safely disassemble an offshore structure provided with a tower and recover the body of an offshore structure.

To achieve the above object, a method for disassembling an offshore structure according to at least one embodiment of the present disclosure includes: a transportation step of transporting a structure having a sheet shape toward a tower of the offshore structure; a setting step of setting the structure having a sheet shape beside the tower; a collapsing step of cutting the tower and collapsing a body of the offshore structure toward the structure having a sheet shape; and a recovery step of recovering the body of the offshore structure.

According to at least one embodiment of the present disclosure, it is possible to provide a method for disassembling an offshore structure whereby it is possible to safely disassemble and recover an offshore structure provided with a tower.

### BRIEF DESCRIPTION OF DRAWINGS

FIG. 1 is a flowchart schematically showing a method for disassembling a meteorological tower 2A according to an embodiment of the present disclosure.
FIG. 2 is a diagram for describing an example of the transportation step (S101) illustrated in FIG. 1.
FIG. 3 is a planar view for describing an example of the setting step (S102) illustrated in FIG. 1.
FIG. 4 is a planar view for describing an example of the setting step (S102) illustrated in FIG. 1.
FIG. 5 is a diagram for describing an example of the collapsing step (S103) illustrated in FIG. 1.
FIG. 6 is a planar view for describing an example of the collapsing step (S103) illustrated in FIG. 1.
FIG. 7 is a diagram for describing another example of the collapsing step (S103) illustrated in FIG. 1.
FIG. 8 is a diagram for describing an example of the recovery step (S104) illustrated in FIG. 1.
FIG. 9 is a diagram for describing an example of using a net as a structure 4 having a sheet shape.
FIG. 10 is a diagram illustrating a state in which the structure 4 (net) having a sheet shape is set so as to surround the tower 8A.
FIG. 11 is a diagram illustrating a state in which the body 2a of the meteorological tower 2A is enveloped with the structure 4 (net) having a sheet shape.
FIG. 12 is a flowchart schematically showing a method for disassembling an offshore wind turbine 2 according to an embodiment of the present disclosure.
FIG. 13 is a diagram for describing an example of the transportation step (S201) illustrated in FIG. 12.
FIG. 14 is a diagram for describing an example of the setting step (S202) illustrated in FIG. 12.
FIG. 15 is a planar view for describing an example of the setting step (S202) illustrated in FIG. 12.
FIG. 16 is a planar view for describing an example of the setting step (S202) illustrated in FIG. 12.
FIG. 17 is a planar view for describing an example of the setting step (S202) illustrated in FIG. 12.
FIG. 18 is a diagram for describing an example of the collapsing step (S203) illustrated in FIG. 12.
FIG. 19 is a planar view for describing an example of the collapsing step (S203) illustrated in FIG. 12.
FIG. 20 is a diagram for describing an example of the collapsing step (S203) illustrated in FIG. 12.
FIG. 21 is a diagram for describing an example of the recovery step (S204) illustrated in FIG. 12.
FIG. 22 is a diagram for describing an example using a net as a structure 4 having a sheet shape.
FIG. 23 is a diagram describing a state in which the structure 4 (net) having a sheet shape is set so as to surround the tower 8.
FIG. 24 is a diagram describing a state in which the body 2a of the wind turbine 2 is enveloped with the structure 4 (net) having a sheet shape.
FIG. 25 is a diagram illustrating a state where the tower 8 is provided with a lid member 39.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### (Method for disassembling a meteorological tower)

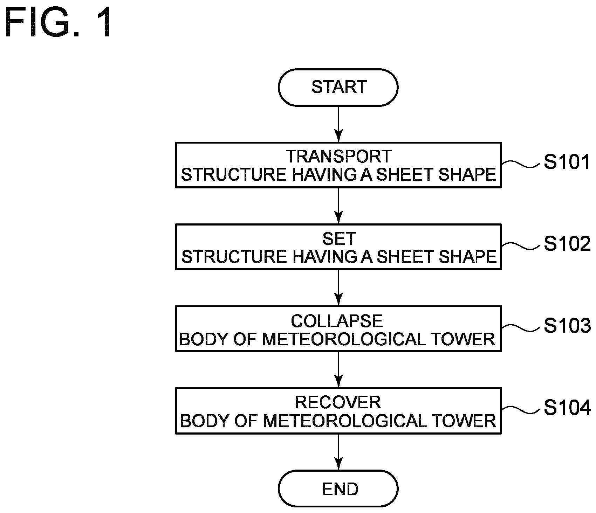

FIG. 1 is a flowchart schematically showing a method for disassembling a meteorological tower according to an embodiment of the present disclosure.

The disassembling method illustrated in FIG. 1 includes a transportation step (S101) of transporting a structure having sheet shape toward a tower (column part) of a meteorological tower, a setting step (S102) of setting a structure having a sheet shape beside the tower, a collapsing step (S103) of cutting the tower and collapsing a body of the meteorological tower toward the structure having a sheet shape, and a recovery step (S104) of recovering the body of the meteorological tower.

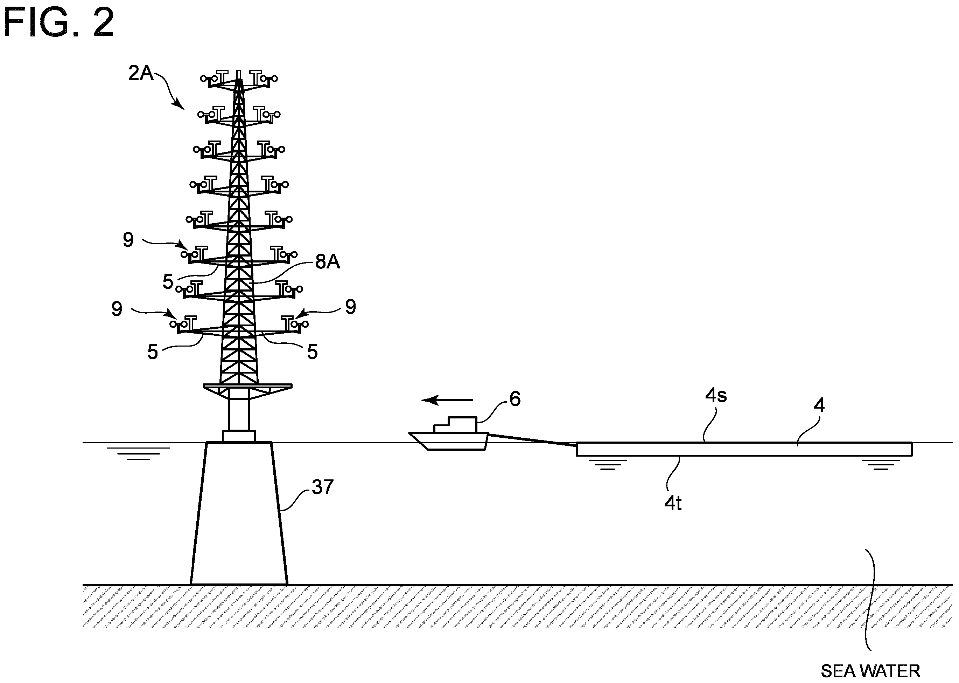

FIG. 2 is a diagram for describing an example of the transportation step (S101) illustrated in FIG. 1.

As depicted in FIG. 2, the meteorological tower 2A includes a tower 8A erected on a foundation 37 fixed to the seabed, and a plurality of branch-shaped protrusions 5 branched and extending from the tower 8A. Each of the branch-shaped protrusions 5 is provided with a measurement instrument 9 for observing parameters related to meteorological phenomenon (e.g., wind direction, wind velocity, temperature, humidity, rainfall, or the like).

As illustrated in FIG. 2, in S101, the structure 4 having a sheet shape is transported by a ship 6 to the position where the meteorological tower 2A is installed. In S101, for instance, the ship 6 may tow and transport the structure 4 having a sheet shape, or, in a case where the structure 4 having a sheet shape is foldable, the structure 4 having a sheet shape may be transported in a folded state, by being towed or loaded on the ship 6.

In the illustrated example, the structure 4 having a sheet shape is a membranous structure (sheet) including a first surface 4s (top surface) formed continuously in a flat shape and a second surface 4t (bottom surface) formed continuously in a flat shape at the opposite side to the first surface 4s.

The material of the structure 4 having a sheet shape may be a material that floats on the sea water, for instance, polyester, EVA (ethylene-vinyl acetate), polypropylene, or the like. The specific gravity of the structure 4 having a sheet shape may be not greater than 1.02, such that the structure 4 having a sheet shape floats on the sea water.

Moreover, the specific gravity of the structure 4 having a sheet shape may be such a specific gravity that the structure 4 having a sheet shape does not sink in a state where the body (described below) of the meteorological tower 2A is loaded on the structure 4 having a sheet shape. Furthermore, the material of the structure 4 having a sheet shape may be a material that does not float on the sea water, in which case a float (described below) formed of a material that floats on the sea water may be attached to the structure 4 having a sheet shape.

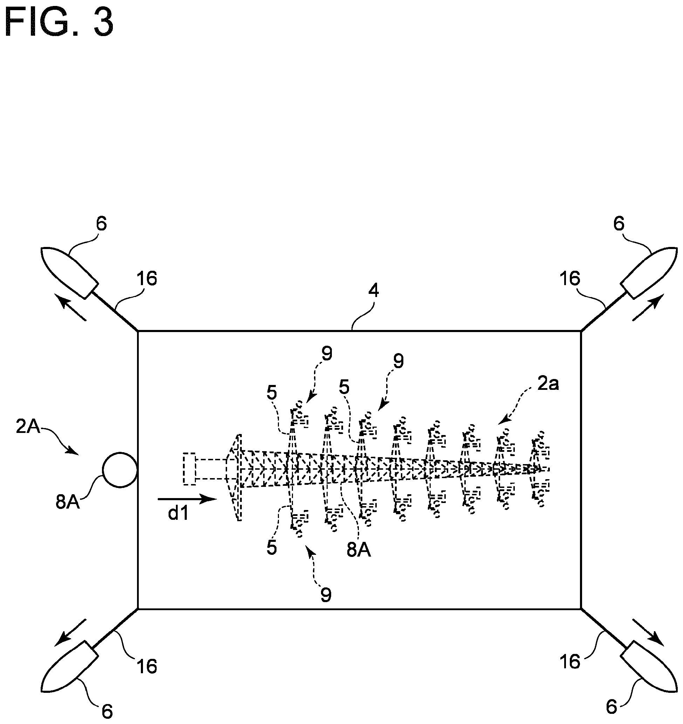

FIG. 3 is a diagram for describing an example of the setting step (S102) illustrated in FIG. 1.

As illustrated in FIG. 3, in S102, the structure 4 having a sheet shape is set beside the tower 8A. In the illustrated example, the structure 4 having a sheet shape is set in the direction d1 in which the body 2a of the meteorological tower 2A is to be collapsed, with respect to the position of the tower 8A. In the illustrated example, the structure 4 having a sheet shape is floated on the sea surface beside the tower 8. Herein, the body 2a of the meteorological tower 2A refers to the part of the meteorological tower 2A above the cutting position (described below) of the tower 8A, and includes, for instance, a part of the tower 8 and a part of the plurality of branch-shaped protrusions 5. Furthermore, in a case where the structure 4 having a sheet shape is transported in a folded state in S101, the structure 4 having a sheet shape in a folded state is expanded and set beside the tower 8A in S102. Furthermore, "setting the structure 4 having a sheet shape beside the tower 8A" means that, more specifically, setting the structure 4 having a sheet shape on the sea in a certain direction with respect to the tower 8A such that the distance between the tower 8A and the structure 4 having a sheet shape is less than 'h', where 'h' is the height of the tower 8A from the sea surface.

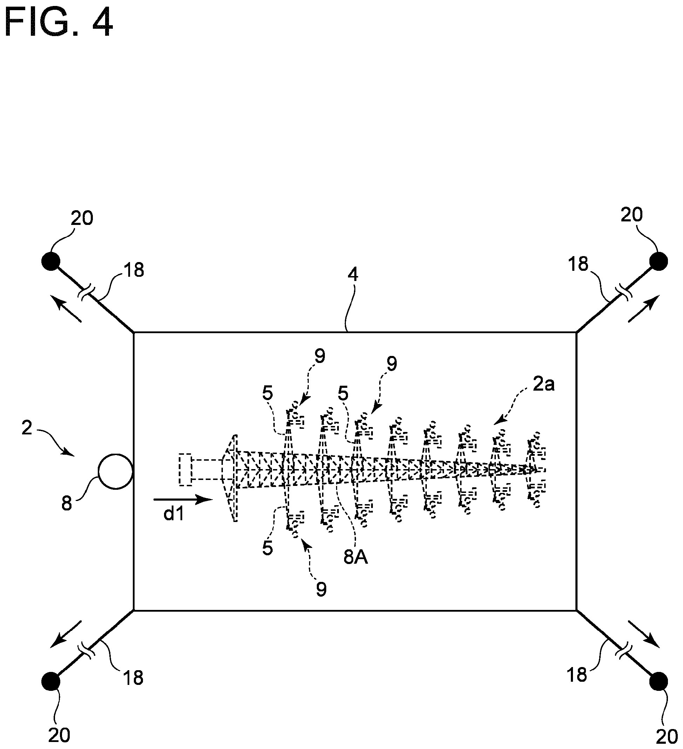

In S102, the structure 4 having a sheet shape may be fixed in a state where tension is applied to the structure 4 having a sheet shape with a plurality of ships 6 (see FIG. 3) or a plurality of anchors 20 (see FIG. 4) so that the structure 4 having a sheet shape does not move in response to wind, wave, or the like.

In the example depicted in FIG. 3, four corners of the structure 4 having a sheet shape that is rectangular in a planar view are fixed while being pulled in four directions by four ships 6 with ropes 16 to apply tension. In the example depicted in FIG. 4, taking into account the safety of the ships 6, the anchors 20 are provided via anchor cables 18 at the respective four corners of the structure 4 having a sheet shape that is rectangular in a planar view, thereby fixing the structure 4 having a sheet shape in a state where tension is applied to the structure 4 having a sheet shape using the anchors 20.

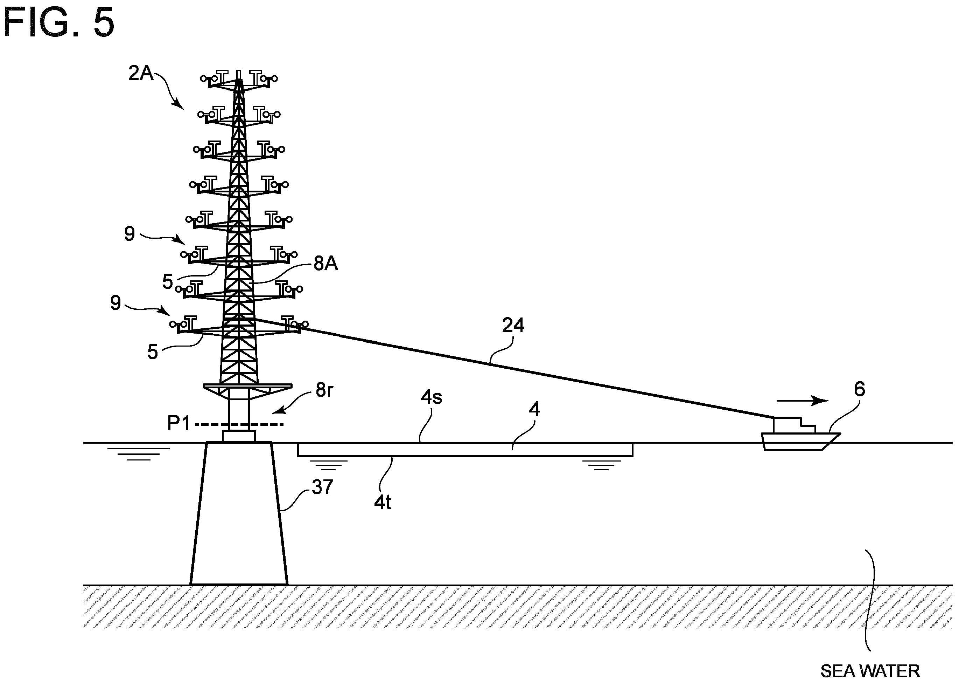

FIG. 5 is a diagram for describing an example of the collapsing step (S103) illustrated in FIG. 1. The dotted line in FIG. 5 indicates the cutting position P1 for cutting the tower 8A in S103.

As depicted in FIG. 5, in S103, the root part 8r of the tower 8A may be cut by a laser or an explosive, for instance, while at least one ship 6 pulls the tower 8A toward the structure 4 having a sheet shape with a rope 24 or the like.

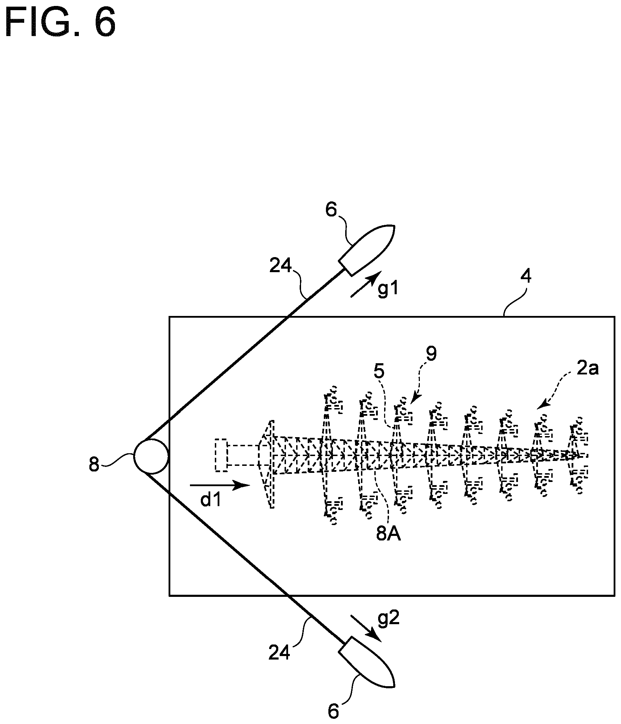

In this case, as depicted in FIG. 6, the body 2a of the meteorological tower 2A may be collapsed toward the direction d1 between two directions g1, g2 that are different from one another by cutting the tower 8A while pulling the tower 8A in the two different directions g1, g2 via ropes 24 with two ships 6. For instance, the body 2a of the meteorological tower 2A may be collapsed toward the direction d1 in the middle of the two different directions g1, g2 by cutting the tower 8A while pulling the tower 8A from the two different directions g1, g2 via ropes 24 with two ships 6 at equal forces. As depicted in FIG. 6, by cutting the tower 8A and collapsing the body 2a of the meteorological tower 2A toward the structure 4 having a sheet shape (in other words, by placing in advance the structure 4 having a sheet shape in the direction d1 in which the body 2a of the meteorological tower 2A is to be collapsed with respect to the tower 8A), it is possible to recover the body 2a of the meteorological tower 2A easily by using the structure 4 having a sheet shape.

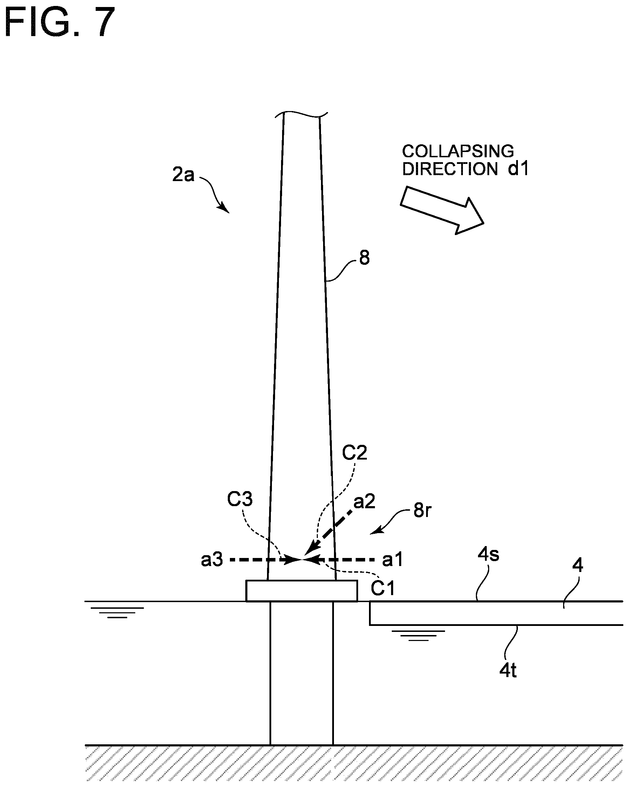

FIG. 7 is a diagram for describing another example of the collapsing step (S103) illustrated in FIG. 1.

As depicted in FIG. 7, in step S103, the first incision C1, the second incision C2, and the third incision C3 may be formed on the tower 8A with a laser.

In the example depicted in FIG. 7. the root part 8r of the tower 8A is irradiated with a laser a1 from the side of the tower 8A closer to the structure 4 having a sheet shape (the first side) so as not to penetrate the tower 8A, and the first incision C1 is formed on the tower 8 (first irradiation step). Next, the root part 8r of the tower 8A is irradiated with a laser a2 from the side of the tower 8A closer to the structure 4 having a sheet shape so as not to penetrate the tower 8A at an angle different from that of the first incision C1, and the second incision C2 connecting to the first incision C1 is formed on the tower 8A, whereby a section (fragment) between the first incision C1 and the second incision C2 on the tower 8A is removed from the tower 8 (second irradiation step). Furthermore, the root part 8r of the tower 8A is irradiated with a laser a3 from the opposite side (second side) of the tower 8A to the structure 4 having a sheet shape, and the third incision C3 connecting to at least one of the first incision C1 or the second incision C2 is formed (third radiation step), whereby the tower 8A is cut off. In the illustrated example, each of the first incision C1 and the third incision C3 is formed on the root part 8r of the tower 8A along the horizontal direction, and the second incision C2 is formed on the root part 8r of the tower 8A from above toward the bottom diagonally.

By irradiating the tower 8A with the lasers a1 to a3 as described above, it is possible to collapse the body 2a of the meteorological tower 2A toward the structure 4 having a sheet shape without pulling the tower 8A with ships. Thus, it is possible to recover the body 2a of the meteorological tower 2A easily and safely using the structure 4 having a sheet shape.

Furthermore, as depicted in FIG. 5. in the collapsing step, in a case where there is a direction in which the branch-shaped protrusion 5 is not protruding from the tower 8A, the direction may be used as the collapsing direction d1. In this case, in a state where the body 2a of the meteorological tower 2A is brought down, the direction in which the branch-shaped protrusion 5 is not protruding from the tower 8A is facing downward. Furthermore, in a case where there is no direction in which the branch-shaped protrusion 5 does not protrude from the tower 8A, the branch-shaped protrusion 5 extending in the collapsing direction d1 may be cut and removed before cutting the tower 8A. Accordingly, it is possible to suppress breakage of the structure 4 having a sheet shape due to the branch-shaped protrusion 5.

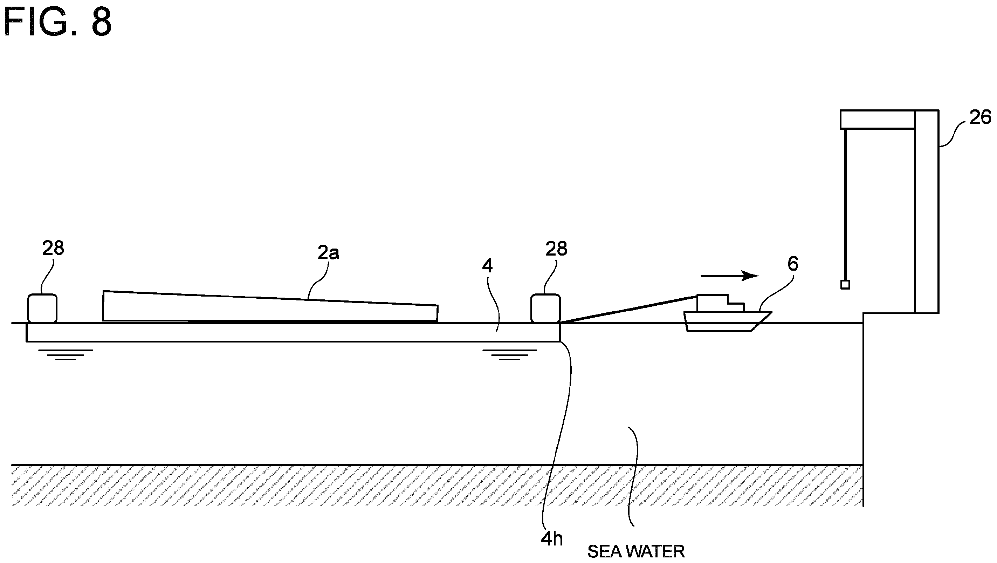

FIG. 8 is a diagram for describing an example of the recovery step (S104) illustrated in FIG. 1.

As illustrated in FIG. 8, in step S104, the structure 4 having a sheet shape on which the body 2a of the meteorological tower 2A is loaded is transported to the shore, and the body 2a of the meteorological tower 2A is hoisted up to the land and recovered.

In the example depicted in FIG. 8, the structure 4 having a sheet shape on which the body 2a of the meteorological tower 2A is loaded is towed by the ship 6 to the shore, and then the body 2a of the meteorological tower 2A is hoisted up to the land using a crane 26. In S104, the body 2a of the meteorological tower 2A may be dismounted into a plurality of components on the sea such that the weight of each component to be hoisted up by the crane 26 does not exceed the allowable load of the crane 26. Furthermore, in a case where the body 2a of the meteorological tower 2A is not dismounted but hoisted as a whole, a heavy crane or the like of a dock of a shipyard may be used to hoist up the body 2a of the meteorological tower 2A, for instance.

Furthermore, in the example depicted in FIG. 8, a plurality of floats 28 are attached to an outer edge portion 4h of the structure 4 having a sheet shape. The number of the floats 28 may be determined such that the structure 4 having a sheet shape does not sink in a state where the body 2a of the meteorological tower 2A is loaded on the structure 4 having a sheet shape. However, in a case where the specific gravity of the structure 4 having a sheet shape is small enough such that the structure 4 having a sheet shape does not sink in a state where the body 2a of the meteorological tower 2A is loaded on, the floats 28 may be omitted.

According to the above-described method for disassembling the meteorological tower 2A, the structure 4 having a sheet shape is set beside the tower 8A before cutting the tower 8A, and then the tower 8A is cut and the body 2a of the meteorological tower 2A is collapsed toward the structure 4 having a sheet shape. Accordingly, it is possible to prevent the body 2a from the meteorological tower 2A from sinking under the sea by using the structure 4 having a sheet shape and recovering the body 2a of the meteorological tower 2A. Furthermore, since the tower 8A is cut off and the body 2a of the meteorological tower 2A is collapsed toward the structure 4 having a sheet shape, it is possible to reduce the amount of high place works compared to a case where the meteorological tower 2A is disassembled in high place works by building up scaffolds around the tower 8A while the tower 8A is still standing, and it is possible to disassemble and recover the meteorological tower 2A safely. Furthermore, by catching the collapsing body 2a of the meteorological tower 2A with the structure 4 having a sheet shape, it is possible to suppress occurrence of wave due to the body 2a of the meteorological tower 2A, and suppress scattering of fragments and dusts of the structure, for instance, from the body 2a of the meteorological tower 2A.

Furthermore, as described above with reference to FIGs 3 and 4, by fixing the structure 4 having a sheet shape while applying tension to the structure 4 having a sheet shape using the ships 6 or the anchors 20, it is possible to suppress movement of the structure 4 having a sheet shape in response to wind or wave, for instance, and receive the body 2a of the meteorological tower 2A collapsed in the collapsing step appropriately with the structure 4 having a sheet shape for recovery.

Furthermore, in a case where the structure 4 having a sheet shape is transported in a folded state and expanded to be set beside the tower 8A, it is possible to facilitate the transportation work for the structure 4 having a sheet shape and receive a large-scale offshore structure such as the meteorological tower 2A with the structure 4 having a sheet shape in an expanded state.

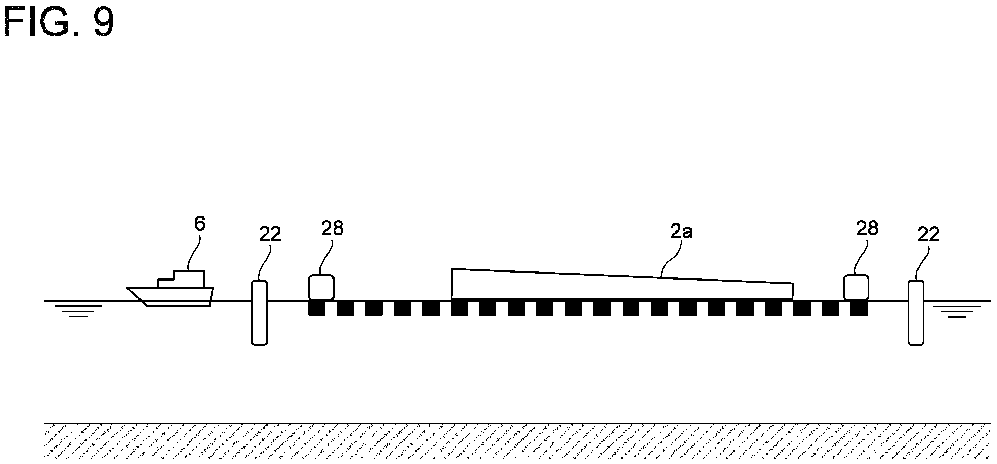

Next, some other embodiments will be described with reference to FIGs. 9 to 11. While the structure 4 having a sheet shape described in the above described embodiment is a membranous structure including the first surface 4s formed continuously in a flat shape and the second surface 4t formed continuously in a flat shape at the opposite side to the first surface 4s, the structure 4 having a sheet shape may be a net-shaped structure (net) as illustrated in FIG. 9. Also in this case, it is possible to implement the method for disassembling the meteorological tower 2A described with reference to FIGs. 1 to 8.

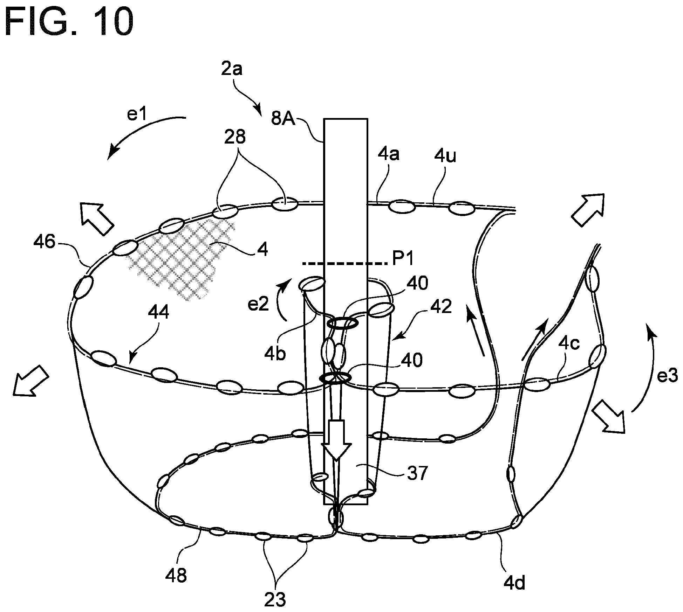

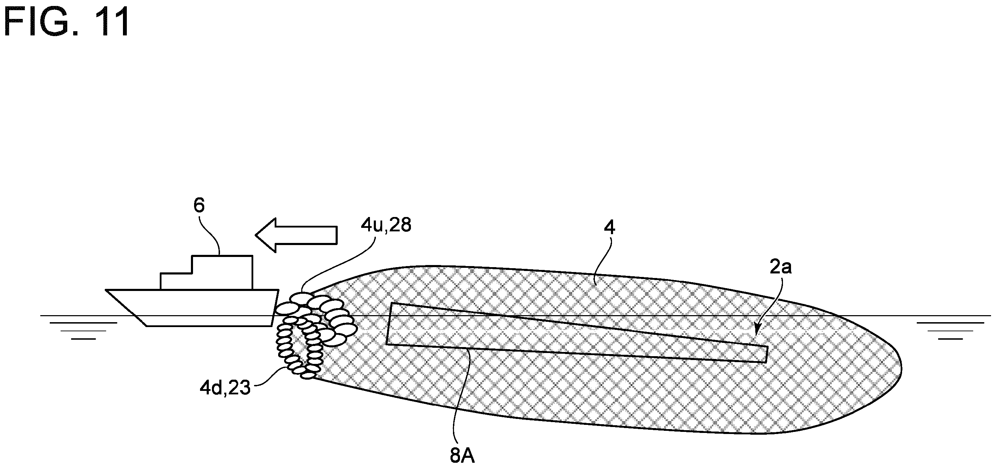

In a case where the structure 4 having a sheet shape is a net-shaped structure, the meteorological tower 2A may be disassembled by the following disassembling method described with reference to FIGs. 10 and 11. In the method for disassembling the meteorological tower 2A described with reference to FIGs. 10 and 11, the basic flow is the same as the steps S101 to S104 illustrated in FIG. 1, but the setting step in S102 and the recovery step in S104 are different from those in the above described embodiment.

In the embodiment depicted in FIGs. 10 and 11, the step of transporting the structure 4 having a sheet shape to the installation position of the meteorological tower 2A and the step of cutting and collapsing the tower 8A toward the structure 4 having a sheet shape are the same as those in the embodiment described above with reference to FIG. 1 or the like, and thus not described in detail here. The following description will describe the step of setting the structure 4 having a sheet shape and the step of transporting the body of the meteorological tower 2A to the shore using the structure 4 having a sheet shape for recovery.

In the example depicted in FIG. 10, the structure 4 having a sheet shape is a net, and a plurality of floats 28 are attached at intervals to the upper edge portion 4u of the structure 4 having a sheet shape, and a plurality of weights 23 are attached at intervals to the lower edge portion 4d of the structure 4 having a sheet shape. Furthermore, a rope 46 is passed through the upper edge portion 4u of the structure 4 having a sheet shape, and a rope 48 is passed through the lower edge portion 4d of the structure having a sheet shape.

In the example depicted in FIG. 10, in the setting step in step S102, the structure 4 having a sheet shape is expanded around the tower 8A (beside the tower 8A) using the ship 6 so as to surround the foundation 37 of the tower 8A with the structure 4 having a sheet shape. At this time, the ship 6 expands the structure 4 having a sheet shape by passing through the inside of the structure 4 having a sheet shape so as to avoid the tower 8A.

Specifically, to begin with, the ship 6 expands a longitudinal-direction first end side portion 4a of the structure 4 having a sheet shape for about a half round around the tower 8A along the first direction e1, which is one of the clockwise direction or the anticlockwise direction in a planar view. Next, the ship 6 expands a longitudinal-direction intermediate portion 4b of the structure 4 having a sheet shape along the second direction e2, which is the other one of the clockwise direction or the anticlockwise direction (opposite direction to the first direction e1) in a planar view, for about a single round along the outer peripheral surface of the tower 8A at the inner peripheral side of the longitudinal-direction first end side portion 4a of the structure 4 having a sheet shape. Next, the ship 6 expands a longitudinal-direction second end side portion 4c of the structure 4 having a sheet shape for about a half round along the above first direction e1 at the outer peripheral side of the longitudinal-direction intermediate portion 4b of the structure 4 having a sheet shape. Then, the overlapping portion of the longitudinal-direction intermediate portion 4b at the first side with respect to the tower 8A is fixed (bonded) by using at least one fixture 40 at one location or two locations at different distances from the tower 8A. The one or two locations for fixing by the fixture 40 should be preferably at the opposite side to the collapsing direction d1 of the body 2a of the meteorological tower 2A so that the body 2a of the meteorological tower 2A can be readily enveloped with the structure 4 having a sheet shape when the fixing is released afterward.

Accordingly, in a planar view, the longitudinal-direction intermediate portion 4b of the structure 4 having a sheet shape is disposed so as to surround the tower 8A, and a combination of the longitudinal-direction first end side portion 4a and the longitudinal-direction second end side portion 4c of the structure 4 having a sheet shape is disposed so as to surround the tower 8A at the radially outer side of the longitudinal-direction intermediate portion 4b. That is, the longitudinal-direction intermediate portion 4b of the structure 4 having a sheet shape forms a radially inner ring 42 which surrounds the tower 8A, and the combination of the longitudinal-direction first end side portion 4a and the longitudinal-direction second end side portion 4c of the structure 4 having a sheet shape forms a radially outer ring 44 which surrounds the radially inner ring 42.

By setting the structure 4 having a sheet shape as described above, it is possible to accommodate the body 2a of the meteorological tower 2A between the radially inner ring 42 and the radially outer ring 44 when the tower 8A is cut and the body 2a of the meteorological tower 2A is collapsed toward the structure 4 having a sheet shape (to the opposite side of the fixture 40 in the illustrated example) in the collapsing step (S103). Furthermore, in the collapsing step, it is possible to ensure a large space for accommodating the body 2a of the meteorological tower 2A inside the structure 4 having a sheet shape (between the radially inner ring 42 and the radially outer ring 44) by pulling the structure 4 having a sheet shape with ships toward a plurality of directions away from the tower 8A (four to five directions indicated by empty arrows in FIG. 10, for instance) to maintain a state where the structure 4 having a sheet shape is expanded, and cutting the tower 8 in the state. In a case where the fixture 40 is provided for a single location, the above side where the large space can be ensured is limited to the opposite side to the fixture 40, and thus it is possible to accommodate the body 2a of the meteorological tower 2A inside the structure 4 having a sheet shape readily by collapsing the body 2a of the meteorological tower 2A toward the opposite side to the fixture 40. In a case where the fixture 40 is provided for two locations, it is possible to position the radially outer ring 44 farther from the radially inner ring 42 and ensure the large space in every direction, thereby increasing the flexibility with regard to the collapsing direction.

It is possible to prevent the collapsed structure from falling down to the seabed by pulling and drawing the rope 48 passed through the lower edge portion 4d of the structure 4 having a sheet shape with a ship until the lower part of the structure 4 having a sheet shape closes, after expanding the structure 4 having a sheet shape as described above and before the collapsing step (S203).

In the recovery step (S104) after the collapsing step, the two fixations by the fixtures 40 are released, and the rope 46 passing through the upper edge portion 4u (the side of the float 28) of the structure 4 having a sheet shape and the rope 48 passing through the lower edge portion 4d (the side of the weight 23) are pulled and drawn by the ship, whereby it is possible to form the structure 4 having a sheet shape into a bag shape and envelope the body 2a of the meteorological tower 2A with the structure 4 having a sheet shape as depicted in FIG. 11. Accordingly, it is possible to tow the body 2a of the meteorological tower 2A to the land along with the structure 4 having a sheet shape, in a state where the body 2a of the meteorological tower 2A is enveloped with the structure 4 having a sheet shape. Once the ship reaches the land, the body 2a of the meteorological tower 2A is hoisted up to the land by a crane 26 (see FIG. 10) while still being enveloped with the structure 4 having a sheet shape.

In the embodiment depicted in FIGs. 10 and 11, the structure 4 having a sheet shape (net) is set so as to surround the tower 8A, and thus it is possible to accommodate the body 2a of the meteorological tower 2A inside the structure 4 having a sheet shape regardless of the direction in which the tower 8A collapses. Thus, it is possible to prevent the body 2a of the meteorological tower 2A from sinking under the sea more reliably by using the structure 4 having a sheet shape, and recover the body 2a of the wind turbine 2 easily.

### (Method for disassembling offshore wind turbine)

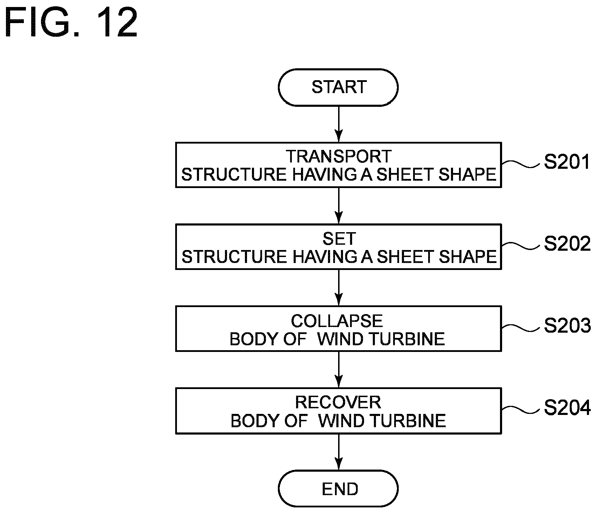

FIG. 12 is a flowchart schematically showing a method for disassembling an offshore wind turbine according to an embodiment of the present disclosure. Hereinafter, an offshore wind turbine will be referred to as merely a wind turbine.

The disassembling method illustrated in FIG. 12 includes a transportation step (S201) of transporting a structure having a sheet shape toward a tower of an offshore wind turbine, a setting step (S202) of setting a structure having a sheet shape beside the tower, a collapsing step (S203) of cutting the tower and collapsing the body of the wind turbine toward the structure having a sheet shape, and a recovery step (S204) of recovering the body of the wind turbine.

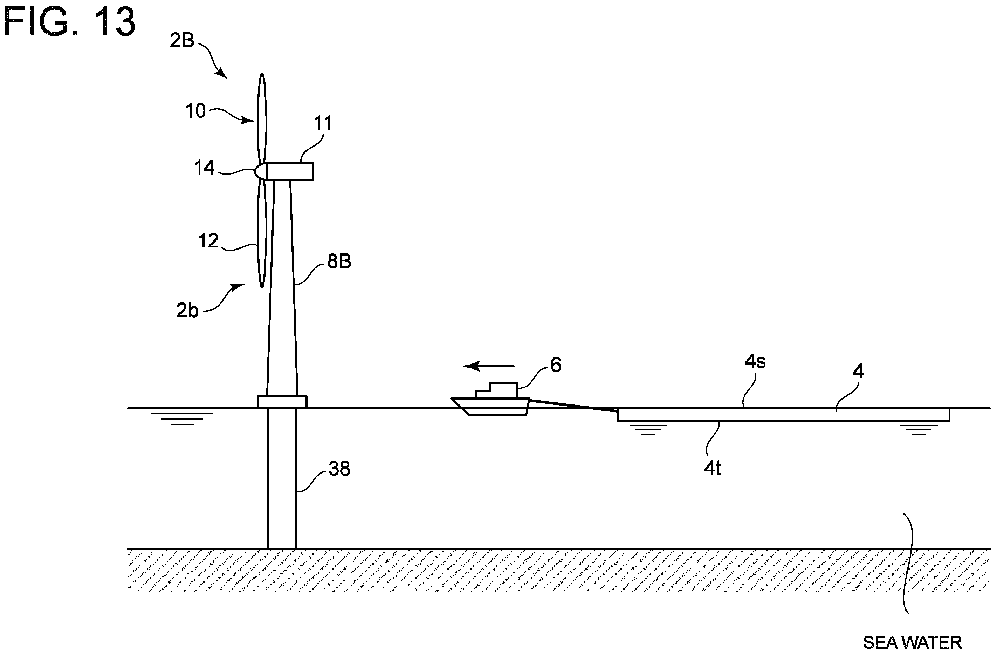

FIG. 13 is a diagram for describing an example of the transportation step (S201) illustrated in FIG. 12.

As depicted in FIG. 13, the wind turbine 2B includes a tower 8B, a wind turbine rotor 10, and a nacelle 11. The wind turbine rotor 10 includes a plurality of blades 12 and a hub 14 to which the plurality of blades 12 are attached. The nacelle 11 supports the hub 14 rotatably.

As depicted in FIG. 13, in S201, the structure 4 having a sheet shape is transported by a ship 6 to the position where the wind turbine 2B is installed. In S201, for instance, the ship 6 may tow and transport the structure 4 having a sheet shape, or, in a case where the structure 4 having a sheet shape is foldable, the structure 4 having a sheet shape may be transported in a folded state, by being towed or loaded on the ship 6.

In the illustrated example, the structure 4 having a sheet shape is a membranous structure (sheet) including a first surface 4s (top surface) formed continuously in a flat shape and a second surface 4t (bottom surface) formed continuously in a flat shape at the opposite side to the first surface 4s.

The material of the structure 4 having a sheet shape may be a material that floats on the sea water, for instance, polyester, EVA (ethylene-vinyl acetate), polypropylene, or the like. The specific gravity of the structure 4 having a sheet shape may be not greater than 1.02, such that the structure 4 having a sheet shape floats on the sea water. In particular, when the structure 4 having a sheet shape is formed of an oil adsorption material (e.g., polypropylene or the like) that adsorbs oil, it is possible to recover oil with the structure 4 having a sheet shape formed of an oil adsorption material even if the oil inside the body 2b of the wind turbine 2B scatters or leaks after the body 2b of the wind turbine 2B is collapsed in the collapsing step described below, whereby it is possible to suppress ocean pollution effectively.

Moreover, the specific gravity of the structure 4 having a sheet shape may be such a specific gravity that the structure 4 having a sheet shape does not sink in a state where the body (described below) of the wind turbine 2B is loaded on the structure 4 having a sheet shape. Furthermore, the material of the structure 4 having a sheet shape may be a material that does not float on the sea water, in which case a float (described below) formed of a material that floats on the sea water may be attached to the structure 4 having a sheet shape.

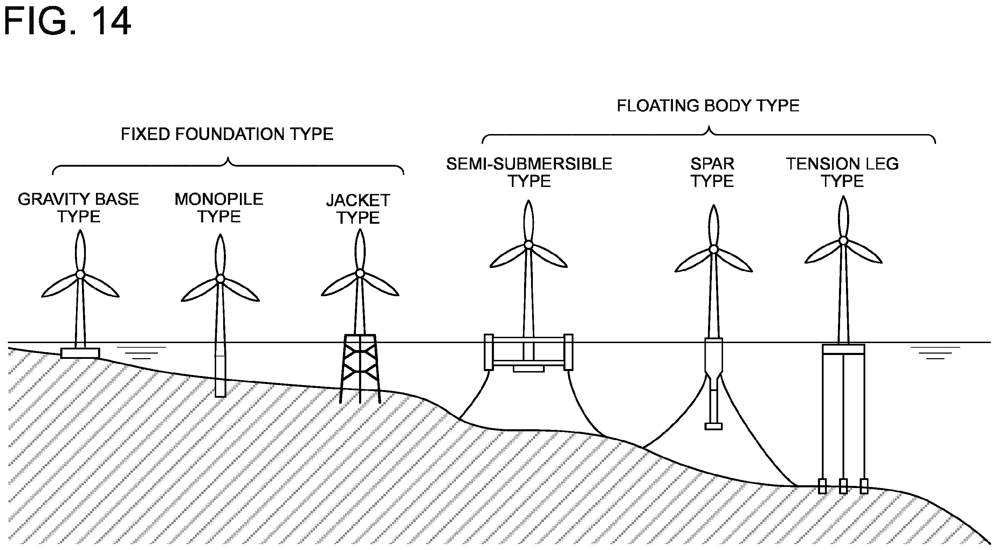

In the example illustrated in FIG. 13, the wind turbine 2B is a monopile type wind turbine provided with a foundation 38 fixed to the seabed. Nevertheless, the method for disassembling a wind turbine 2B according to the present disclosure is applicable to any type of wind turbine, including a fixed-foundation wind turbine such as the gravity base type, the monopile type, and the jacket type, and a floating wind turbine such as the semi-submersible type, the spar type, and the tension leg type, depicted in FIG. 14.

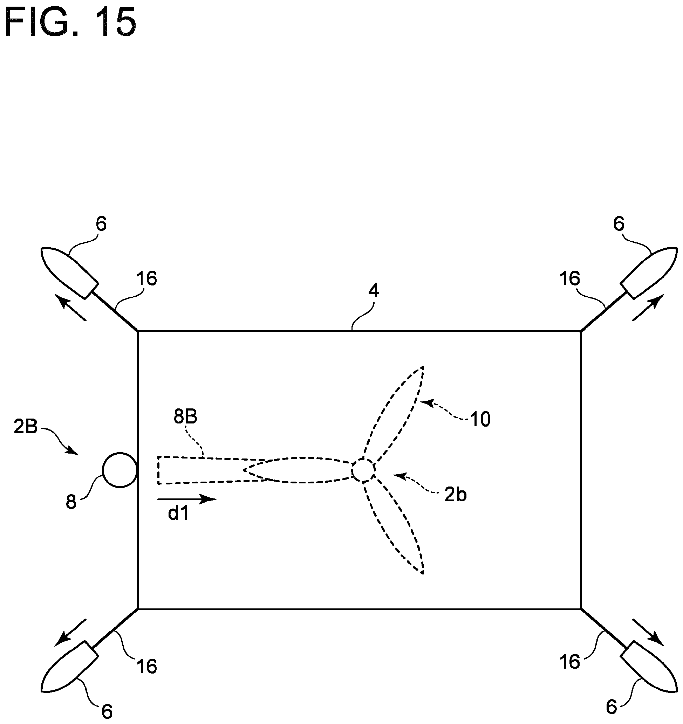

FIG. 15 is a diagram for describing an example of the setting step (S202) illustrated in FIG. 12.

As illustrated in FIG. 15, in S202, the structure 4 having a sheet shape is set beside the tower 8B. In the illustrated example, the structure 4 having a sheet shape is set in the direction d1 in which the body 2b of the wind turbine 2B is to be collapsed, with respect to the position of the tower 8B. In the illustrated example, the structure 4 having a sheet shape is floated on the sea surface beside the tower 8B. Herein, the body 2b of the wind turbine 2B refers to the section above the cutting position (described below) of the tower 8B of the wind turbine 2B, and includes the wind turbine rotor 10, the nacelle 11 (see FIG. 13), and a part of the tower 8B. Furthermore, in a case where the structure 4 having a sheet shape is transported in a folded state in S201, the structure 4 having a sheet shape in a folded state is expanded and set beside the tower 8B in S202. Furthermore, "setting the structure 4 having a sheet shape beside the tower 8B" means that, more specifically, setting the structure 4 having a sheet shape on the sea in a certain direction with respect to the tower 8B such that the distance between the tower 8B and the structure 4 having a sheet shape is less than 'h', where 'h' is the height of the tower 8B from the sea surface.

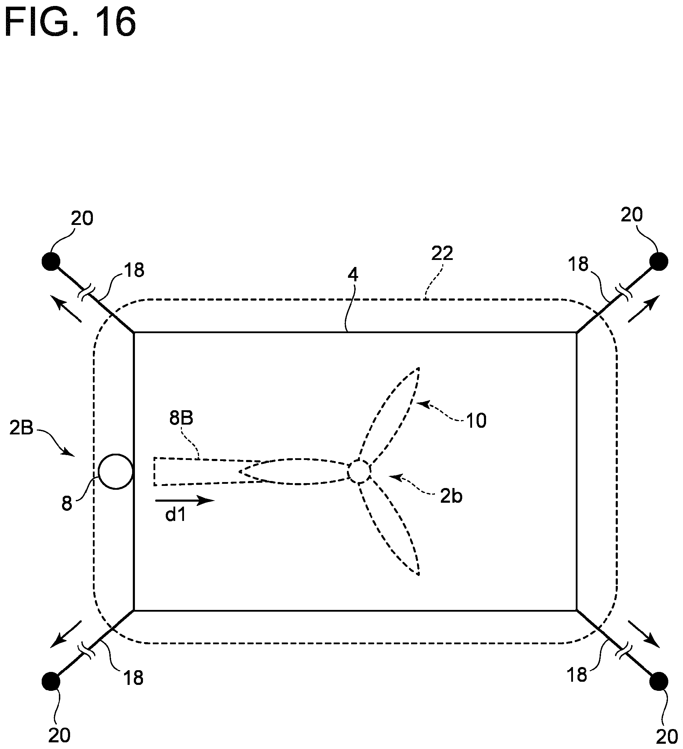

In S202, the structure 4 having a sheet shape may be fixed in a state where tension is applied to the structure 4 having a sheet shape with a plurality of ships 6 (see FIG. 15) or a plurality of anchors 20 (see FIG. 16) so that the structure 4 having a sheet shape does not move in response to wind, wave, or the like.

In the example depicted in FIG. 15, four corners of the structure 4 having a sheet shape that is rectangular in a planar view are fixed while being pulled in four directions by four ships 6 with ropes 16 to apply tension. In the example depicted in FIG. 16, taking into account the safety of the ships 6, the anchors 20 are provided via anchor cables 18 at the respective four corners of the structure 4 having a sheet shape that is rectangular in a planar view, thereby fixing the structure 4 having a sheet shape in a state where tension is applied to the structure 4 having a sheet shape using the anchors 20.

In S202, as illustrated in FIG. 16 for instance, an oil fence 22 may be set so as to surround the structure 4 having a sheet shape. Furthermore, while the oil fence 22 is set so as to surround the tower 8B and the structure 4 having a sheet shape in the example illustrated in FIG. 16, the oil fence 22 may be set so as to surround only the structure 4 having a sheet shape and not the tower 8B.

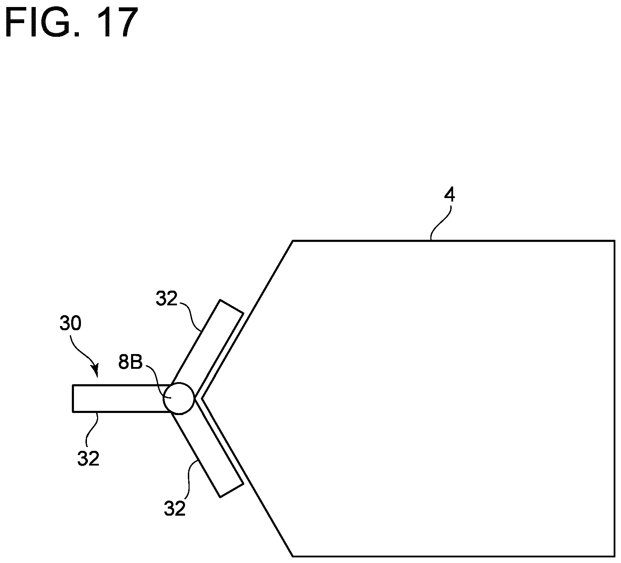

Furthermore, in a case where the wind turbine 2B is a semi-submersible type (see FIG. 14) offshore wind turbine, as illustrated in FIG. 17 for instance, the shape of the structure 4 having a sheet shape may be a shape conforming to the shape of the floating body 30 of the wind turbine 2B in a planar view. In the example depicted in FIG. 17, the floating body 30 includes three lower hulls 32, and in a planar view, the three lower hulls 32 extend from the position of the tower 8B in respective directions that are different from one another by 120 angular degrees. Furthermore, in the example depicted in FIG. 17, the structure 4 having a sheet shape has a pentagonal shape including two sides that extend along the two lower hulls 32 of the three lower hulls 32 in a planar view, and the two sides make an angle of 120 degrees.

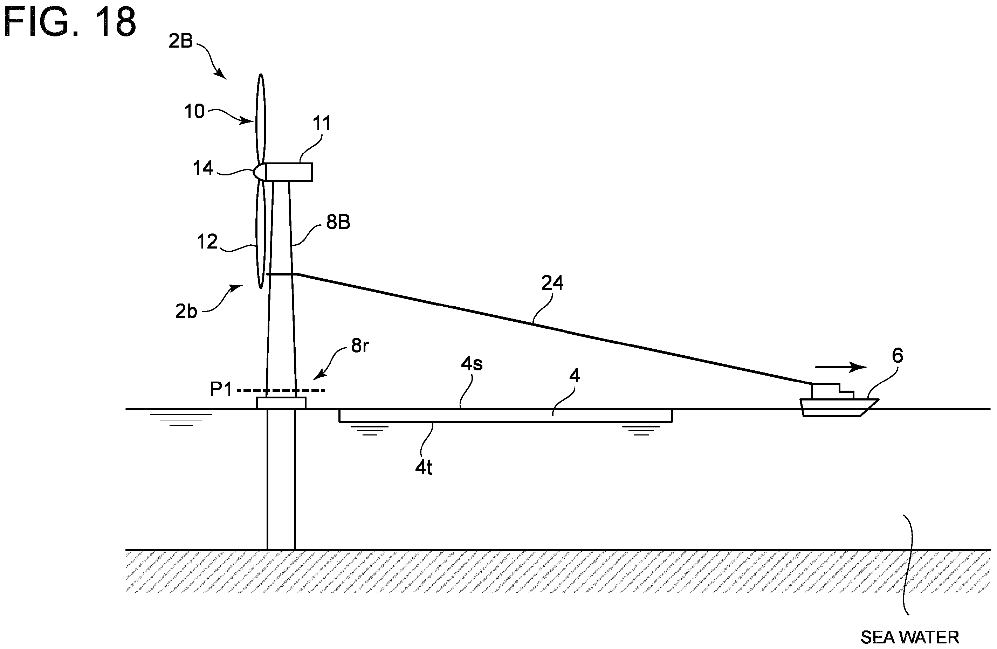

FIG. 18 is a diagram for describing an example of the collapsing step (S203) illustrated in FIG. 12. The dotted line in FIG. 18 indicates the cutting position P1 for cutting the tower 8B in S203.

As depicted in FIG. 18, in S203, the root part 8r of the tower 8B may be cut by a laser or an explosive, for instance, while at least one ship 6 pulls the tower 8B toward the structure 4 having a sheet shape with the rope 24 or the like.

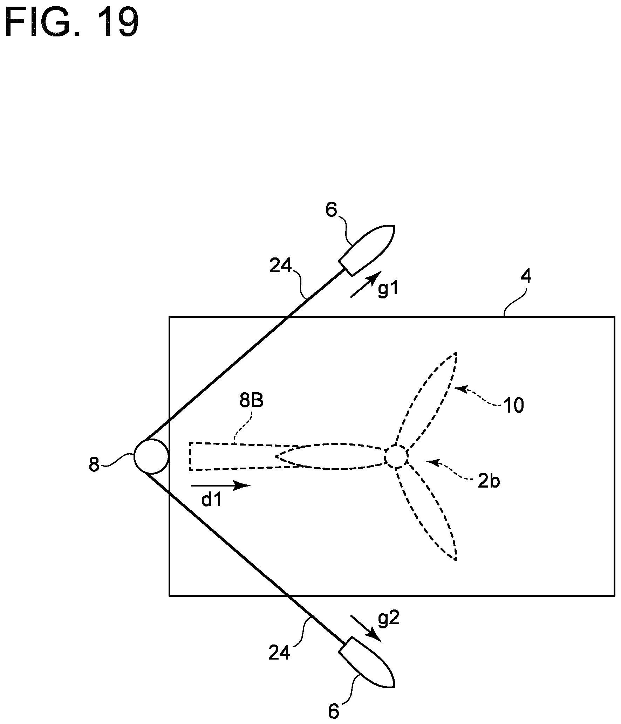

In this case, as depicted in FIG. 19 for instance, the body 2b of the wind turbine 2B may be collapsed toward the direction d1 between two directions g1, g2 that are different from one another by cutting the tower 8B while pulling the tower 8B in the two different directions g1, g2 with two ships 6 via the ropes 24. For instance, the body 2b of the wind turbine 2B may be collapsed toward the direction d1 in the middle of the two different directions g1, g2 by cutting the tower 8B while pulling the tower 8B from the two different directions g1, g2 at equal forces with the two ships 6 via the ropes 24 As depicted in FIG. 19, by cutting the tower 8B and collapsing the body 2b of the wind turbine 2B toward the structure 4 having a sheet shape (in other words, by placing in advance the structure 4 having a sheet shape in the direction d1 in which the body 2b of the wind turbine 2B is to be collapsed with respect to the tower 8B), it is possible to recover the body 2b of the wind turbine 2B easily by using the structure 4 having a sheet shape.

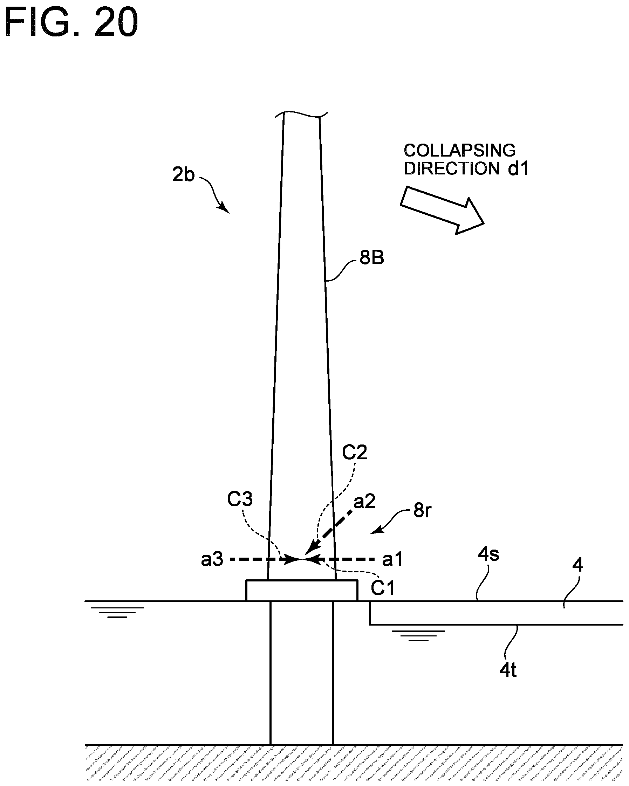

FIG. 20 is a diagram for describing another example of the collapsing step (S203) illustrated in FIG. 12.

As depicted in FIG. 20, in step S203, the first incision C1, the second incision C2, and the third incision C3 may be formed with a laser.

In the example depicted in FIG. 20, the root part 8r of the tower 8B is irradiated with a laser a1 from the side of the tower 8B closer to the structure 4 having a sheet shape (the first side) so as not to penetrate the tower 8B, and the first incision C1 is formed on the tower 8B (first irradiation step). Next, the root part 8r of the tower 8B is irradiated with a laser a2 from the side of the tower 8B closer to the structure 4 having a sheet shape so as not to penetrate the tower 8B at an angle different from that of the first incision C1, and the second incision C2 connecting to the first incision C1 is formed on the tower 8B, whereby a section (fragment) between the first incision C1 and the second incision C2 on the tower 8B is removed from the tower 8B (second irradiation step). Furthermore, the root part 8r of the tower 8B is irradiated with a laser a3 from the opposite side (second side) of the tower 8B to the structure 4 having a sheet shape, and the third incision C3 connecting to at least one of the first incision C1 or the second incision C2 is formed (third irradiation step), whereby the tower 8B is cut off. In the illustrated example, each of the first incision C1 and the third incision C3 is formed on the root part 8r of the tower 8B along the horizontal direction, and the second incision C2 is formed on the root part 8r of the tower 8B from above toward the bottom diagonally.

By irradiating the tower 8B with the lasers a1 to a3 as described above, it is possible to collapse the body 2b of the wind turbine 2B toward the structure 4 having a sheet shape without pulling the tower 8B with ships. Thus, it is possible to recover the body 2b of the wind turbine 2B easily and safely using the structure 4 having a sheet shape.

Furthermore, in the collapsing step described with reference to FIGs. 18 to 20, it is desirable to collapse the body 2b of the wind turbine 2B in the direction of the front side or the back side of the body 2b of the wind turbine 2B. Accordingly, it is possible to suppress breakage of the structure 4 having a sheet shape due to the blades 12b of the wind turbine 2B. Herein, the front side and the back side of the body 2b of the wind turbine 2B refer to the front side (upwind side) and the rear side (downwind side) along the rotational axis of the wind turbine rotor 10, in a case where the wind turbine is a horizontal-axis wind turbine.

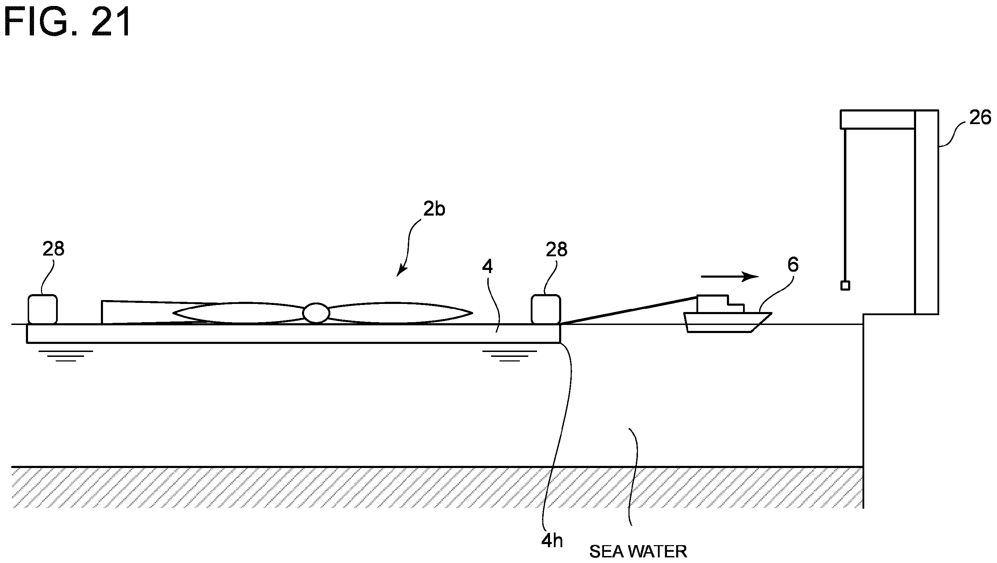

FIG. 21 is a diagram for describing an example of the recovery step (S204) illustrated in FIG. 12.

As illustrated in FIG. 21, in step S204, the structure 4 having a sheet shape on which the body 2b of the wind turbine 2B is loaded is transported to the shore, and the body 2b of the wind turbine 2B is hoisted up to the land and recovered.

In the example depicted in FIG. 21, the structure 4 having a sheet shape on which the body 2b of the wind turbine 2B is loaded is towed by the ship 6 to the shore, and then the body 2b of the wind turbine 2B is hoisted up to the land using a crane 26. In S204, the body 2b of the wind turbine 2B may be dismounted into a plurality of components on the sea such that the weight of each component to be hoisted up by the crane 26 does not exceed the allowable load of the crane 26. Furthermore, in a case where the body 2b of a large-scale wind turbine 2B is not dismounted but hoisted as a whole, a heavy crane or the like of a dock of a shipyard may be used to hoist up the body 2b of the wind turbine 2B, for instance.

Furthermore, in the example depicted in FIG. 21, a plurality of floats 28 are attached to an outer edge portion 4h of the structure 4 having a sheet shape. The number of the floats 28 may be determined such that the structure 4 having a sheet shape does not sink in a state where the body 2b of the wind turbine 2B is loaded on the structure 4 having a sheet shape. However, in a case where the specific gravity of the structure 4 having a sheet shape is small enough such that the structure 4 having a sheet shape does not sink in a state where the body 2b of the wind turbine 2B is loaded on, the floats 28 may be omitted.

According to the above-described method for disassembling the wind turbine 2B, the structure 4 having a sheet shape is set beside the tower 8B before cutting the tower 8B, and then the tower 8B is cut and the body of the wind turbine 2B is collapsed toward the structure 4 having a sheet shape. Accordingly, it is possible to prevent the body 2b of the wind turbine 2B from sinking under the sea by using the structure 4 having a sheet shape and recover the body 2b of the wind turbine 2B. Furthermore, since the tower 8B is cut off and the body 2b of the wind turbine 2B is collapsed toward the structure 4 having a sheet shape, it is possible to reduce the amount of high place works compared to a case where the wind turbine 2B is disassembled in high place works by building up scaffolds around the tower 8B while the tower 8B is still standing, and it is possible to disassemble and recover the wind turbine 2B safely. Furthermore, by catching the collapsing body 2b of the wind turbine 2B with the structure 4 having a sheet shape, it is possible to suppress occurrence of wave due to the body 2b of the wind turbine 2B, and suppress scattering and leakage of oil, for instance, from the body 2b of the wind turbine 2B.

Furthermore, as described above with reference to FIGs. 15 and 16, by fixing the structure 4 having a sheet shape while applying tension to the structure 4 having a sheet shape using the ships 6 or the anchors 20, it is possible to suppress movement of the structure 4 having a sheet shape in response to wind or wave, for instance, and receive the body 2b of the wind turbine 2B collapsed in the collapsing step appropriately with the structure 4 having a sheet shape for recovery.

Furthermore, as described above with reference to FIG. 16, by setting the oil fence 22 so as to surround the structure 4 having a sheet shape before the collapsing step (S203), it is possible to recover oil with the oil fence 22 even if oil inside the wind turbine 2B scatters or leaks when or after the body 2b of the wind turbine 2B is collapsed, whereby it is possible to suppress ocean pollution.

In a case where the structure having a sheet shape is transported in a folded state and expanded to be set beside the tower, it is possible to facilitate the transportation work for the structure having a sheet shape and receive a large-scale offshore structure such as the wind turbine 2B with the structure 4 having a sheet shape in an expanded state.

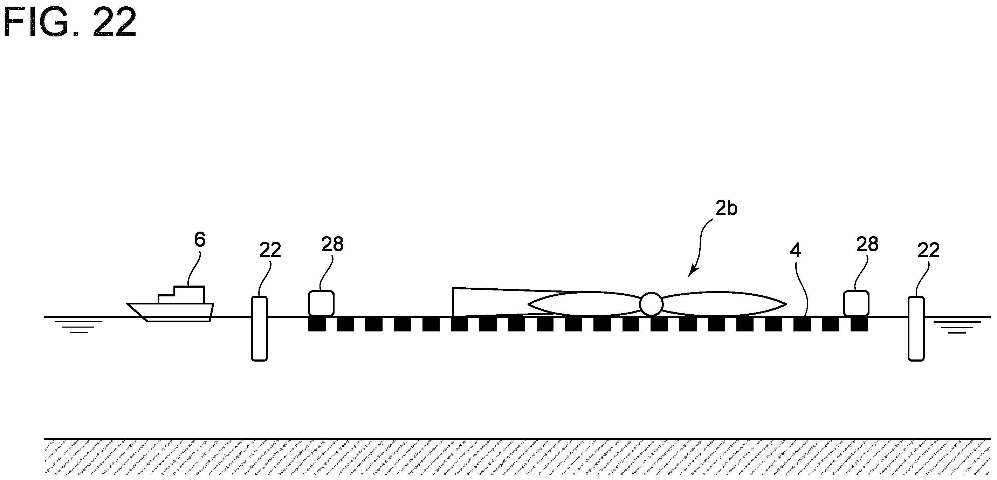

Next, some other embodiments will be described with reference to FIGs. 22 to 24. While the structure 4 having a sheet shape described in the above described embodiment is a membranous structure including a first surface 4s formed continuously in a flat shape and a second surface 4t formed continuously in a flat shape at the opposite side to the first surface 4s, the structure 4 having a sheet shape may be a net-shaped structure (net) as illustrated in FIG. 22. Also in this case, it is possible to implement the method for disassembling the wind turbine 2B described with reference to FIGs. 12 to 21.

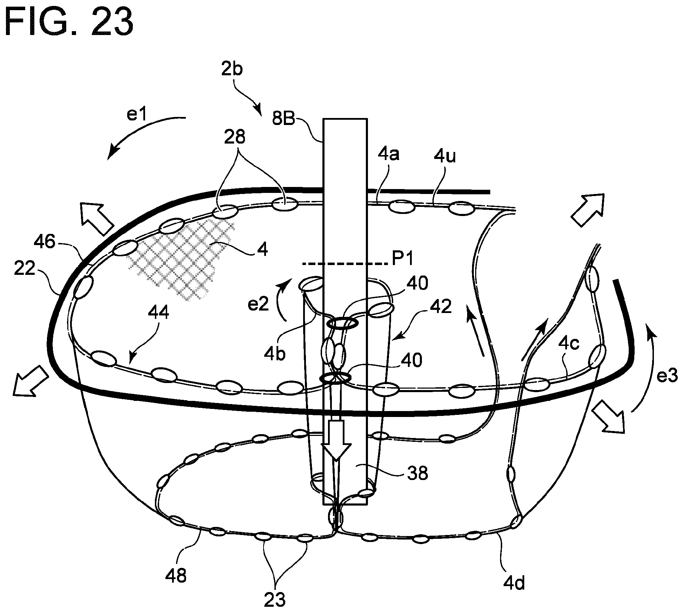

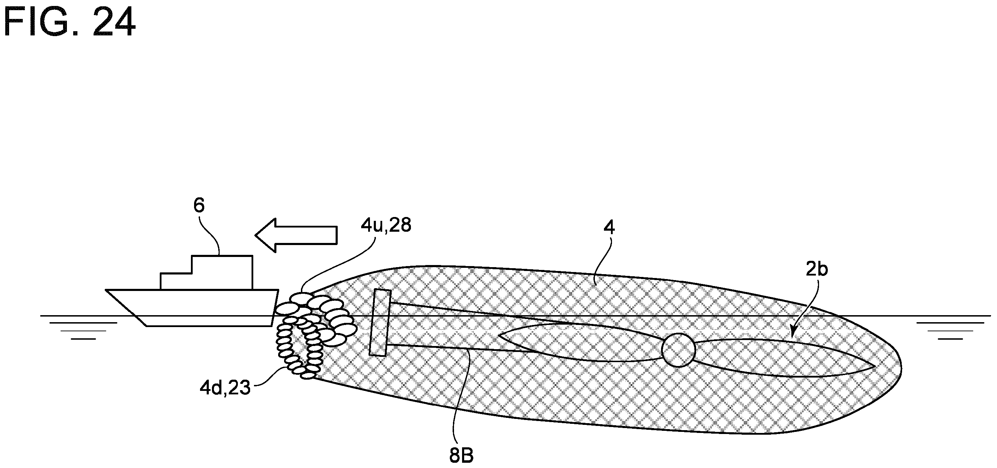

In a case where the structure 4 having a sheet shape is a net-shaped structure, the wind turbine 2B may be disassembled by the following disassembling method described with reference to FIGs. 23 and 24. In the method for disassembling the wind turbine 2B described with reference to FIGs. 23 and 24, the basic flow is the same as the steps S201 to S204 illustrated in FIG. 12, but the setting step in S202 and the recovery step in S204 are different from those in the above described embodiment.

In the embodiment depicted in FIGs. 23 and 24, the step of transporting the structure 4 having a sheet shape to the setting position of the wind turbine 2B and the step of cutting and collapsing the tower 8B toward the structure 4 having a sheet shape are the same as those in the embodiment described above with reference to FIG. 12 or the like, and thus not described in detail here. The following description will describe the step of setting the structure 4 having a sheet shape and the step of transporting the body of the wind turbine 2B using the structure 4 having a sheet shape to the shore for recovery.

In the example depicted in FIG. 23, the structure 4 having a sheet shape is a net, and a plurality of floats 28 are attached at intervals to the upper edge portion 4u of the structure 4 having a sheet shape, and a plurality of weights 23 are attached at intervals to the lower edge portion 4d of the structure 4 having a sheet shape. Furthermore, a rope 46 is passed through the upper edge portion 4u of the structure 4 having a sheet shape, and a rope 48 is passed through the lower edge portion 4d of the structure 4 having a sheet shape.

In the example depicted in FIG. 23, in the setting step in step S202, the structure 4 having a sheet shape is expanded around the tower 8B (beside the tower 8B) using the ship 6 so as to surround the foundation 38 of the tower 8B with the structure 4 having a sheet shape. At this time, the ship 6 expands the structure 4 having a sheet shape by passing through the inside of the structure 4 having a sheet shape so as to avoid the tower 8B.

Specifically, to begin with, the ship 6 expands a longitudinal-direction first end side portion 4a of the structure 4 having a sheet shape for about a half round around the tower 8B along the first direction e1, which is one of the clockwise direction or the anticlockwise direction in a planar view. Next, the ship 6 expands a longitudinal-direction intermediate portion 4b of the structure 4 having a sheet shape along the second direction e2, which is the other one of the clockwise direction or the anticlockwise direction (opposite direction to the first direction e1) in a planar view, for about a single round along the outer peripheral surface of the tower 8B at the inner peripheral side of the longitudinal-direction first end side portion 4a of the structure 4 having a sheet shape. Next, the ship 6 expands a longitudinal-direction second end side portion 4c of the structure 4 having a sheet shape for about a half round along the above first direction e1 at the outer peripheral side of the longitudinal-direction intermediate portion 4b of the structure 4 having a sheet shape. Then, the overlapping portion of the longitudinal-direction intermediate portion 4b at the first side with respect to the tower 8B is fixed (bonded) by using at least one fixture 40 at one location or two locations at different distances from the tower 8B. The one or two locations for fixing by the fixture 40 should be preferably at the opposite side to the collapsing direction d1 of the body 2b of the wind turbine 2B so that the body 2a of the wind turbine 2B can be readily enveloped with the structure 4 having a sheet shape when the fixing is released afterward.

Accordingly, in a planar view, the longitudinal-direction intermediate portion 4b of the structure 4 having a sheet shape is disposed so as to surround the tower 8B, and a combination of the longitudinal-direction first end side portion 4a and the longitudinal-direction second end side portion 4c of the structure 4 having a sheet shape is disposed so as to surround the tower 8B at the radially outer side of the longitudinal-direction intermediate portion 4b. That is, the longitudinal-direction intermediate portion 4b of the structure 4 having a sheet shape forms a radially inner ring 42 which surrounds the tower 8B, and the combination of the longitudinal-direction first end side portion 4a and the longitudinal-direction second end side portion 4c of the structure 4 having a sheet shape forms a radially outer ring 44 which surrounds the radially inner ring 42.

By setting the structure 4 having a sheet shape as described above, it is possible to accommodate the body 2b of the wind turbine 2B between the radially inner ring 42 and the radially outer ring 44 when the tower 8B is cut and the body 2b of the wind turbine 2B is collapsed toward the structure 4 having a sheet shape (to the opposite side of the fixture 40 in the illustrated example) in the collapsing step (S203). Furthermore, in the collapsing step, it is possible to ensure a large space for accommodating the body 2b of the wind turbine 2B inside the structure 4 having a sheet shape (between the radially inner ring 42 and the radially outer ring 44) by pulling the structure 4 having a sheet shape and the oil fence 22 with ships toward a plurality of directions away from the tower 8B (four to five directions indicated by empty arrows in FIG. 23, for instance) to maintain a state where the structure 4 having a sheet shape and the oil fence 22 are expanded, and cutting the tower 8B in the state. In a case where the fixture 40 is provided for a single location, the above side where the large space can be ensured is limited to the opposite side to the fixture 40, and thus it is possible to accommodate the body 2a of the wind turbine 2B inside the structure 4 having a sheet shape readily by collapsing the body 2b of the wind turbine 2B toward the opposite side to the fixture 40. In a case where the fixture 40 is provided for two locations, it is possible to position the radially outer ring 44 farther from the radially inner ring 42 and ensure the large space in every direction, thereby increasing the flexibility with regard to the collapsing direction.

It is possible to prevent the collapsed structure from falling down to the seabed by pulling and drawing the rope 48 passed through the lower edge portion 4d of the structure 4 having a sheet shape with a ship until the lower part of the structure 4 having a sheet shape closes, after expanding the structure 4 having a sheet shape as described above and before the collapsing step (S203).

In the recovery step (S204) after the collapsing step, the two fixations by the fixtures 40 are released, and the rope 46 passing through the upper edge portion 4u (the side of the float 28) of the structure 4 having a sheet shape and the rope 48 passing through the lower edge portion 4d (the side of the weight 23) are pulled and drawn by the ship, whereby it is possible to form the structure 4 having a sheet shape into a bag shape and envelope the body 2b of the wind turbine 2B with the structure 4 having a sheet shape as depicted in FIG. 24. Accordingly, it is possible to tow the body 2b of the wind turbine 2B to the land along with the structure 4 having a sheet shape, in a state where the body 2b of the wind turbine 2B is enveloped with the structure 4 having a sheet shape. Once the ship reaches the land, the body 2b of the wind turbine 2B is hoisted up to the land by a crane 26 (see FIG. 21) while still being enveloped with the structure 4 having a sheet shape.

In the embodiment depicted in FIGs. 23 and 24, the structure 4 having a sheet shape (net) is set so as to surround the tower 8B, and thus it is possible to accommodate the body 2b of the wind turbine 2B inside the structure 4 having a sheet shape regardless of the direction in which the tower 8B collapses. Thus, it is possible to prevent the body 2b of the wind turbine 2B from sinking under the sea more reliably by using the structure 4 having a sheet shape, and recover the body 2b of the wind turbine 2B easily.

Embodiments of the present invention were described in detail above, but the present invention is not limited thereto, and various amendments and modifications may be implemented.

For instance, in the embodiment illustrated in FIG. 23 or the like, the rope 48 passing through the lower edge portion 4d of the structure 4 having a sheet shape (net) may be pulled and drawn by ships in advance before the collapsing step (S203). Accordingly, it is possible to recover the body 2b of the wind turbine 2B more reliably with the structure 4 having a sheet shape.

Furthermore, for instance, while the recovery step (S204) illustrated in FIG. 21 includes transporting the structure 4 having a sheet shape on which the body 2b of the wind turbine 2B is loaded and hoisting the body 2b of the wind turbine 2B up to the land for recovery, in another embodiment, the body 2b of the wind turbine 2B may be disassembled for recovery by using a ship with a heavy machine (not depicted) before transporting the body 2b of the wind turbine 2B to the land, after the collapsing step (S203).

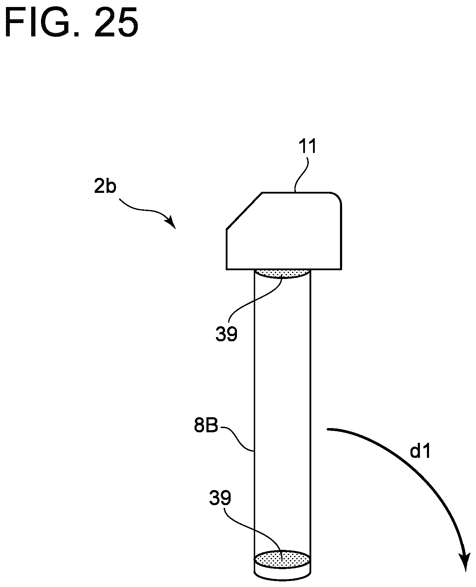

Furthermore, for instance, in each of the above described embodiments, a lid member 39 for restricting intrusion of sea water to the inside of the tower 8B may be provided for each of the root part 8r of the tower 8B and the tip part 8t of the tower 8B as illustrated in FIG. 25 for instance, before the collapsing step (S203). The lid members 39 may have a panel shape as depicted in the drawing, or may have a balloon shape (not depicted).

Accordingly, when the tower 8B is cut and the body 2b of the wind turbine 2B is collapsed in the collapsing step, it is possible to suppress escape of air from the inside of the tower 8B due to intrusion of sea water to the inside of the tower 8B and allow the tower 8B to float on the sea water more easily. Thus, it is possible to cause the body 2b of the wind turbine 2B to be less likely to sink under the sea water, and to reduce the buoyancy required for the structure 4 having a sheet shape or the float 28 for causing the body 2b of the wind turbine 2B to float on the sea water. Furthermore, it is possible to suppress scattering or leakage of oil or dust or the like inside the tower 8B of the wind turbine 2B to the outside of the tower 8B.

Moreover, it is desirable to dispose the lid member 39 for the root part 8r above the cutting position P1 (see FIG. 18, for instance) of the tower 8B and at a position appropriately distanced from the cutting position P1, such that the lid member 39 is not affected by the explosive or the laser used on the tower 8B, for instance, in the collapsing step. Furthermore, in another embodiment, a float member may be attached to the tower 8B instead of the lid member 39 to let the tower 8B float.

Furthermore, while the above described embodiments describe the method for disassembling the meteorological tower 2A and the method for disassembling the wind turbine 2B, the present disclosure is not limited to the meteorological tower 2A and wind turbine 2B, and is also applicable to a method for disassembling any offshore structure provided with a tower.

The contents described in the above respective embodiments can be understood as follows, for instance.
(1) According to at least one embodiment of the present disclosure, a method for disassembling an offshore structure (e.g., the above described meteorological tower 2A or the wind turbine 2B) includes: a transportation step of transporting a structure having a sheet shape (e.g., the above described structure 4 having a sheet shape) toward a tower (e.g., the above described tower 8A or tower 8B) of the offshore structure; a setting step of setting the structure having a sheet shape beside the tower; a collapsing step of cutting the tower and collapsing a body (e.g., the above described body 2a or body 2b) of the offshore structure toward the structure having a sheet shape; and a recovery step of recovering the body of the offshore structure.

According to the above method for disassembling an offshore structure, the structure having a sheet shape is set beside the tower before cutting the tower, and then the tower is cut and the body of the offshore structure is collapsed toward the structure having a sheet shape. Accordingly, it is possible to prevent the body of the offshore structure from sinking under the sea by using the structure having a sheet shape and recover the body of the offshore structure. Furthermore, since the tower is cut off and the body of the offshore structure is collapsed toward the structure having a sheet shape, it is possible to reduce the amount of high place works compared to a case where the offshore structure is disassembled in high place works by setting up scaffolds around the tower while the tower is still standing, and thus it is possible to disassemble and recover the offshore structure safely.

(2) In some embodiments, in the above method for disassembling an offshore structure (1), the setting step includes fixing the structure having a sheet shape while applying tension to the structure having a sheet shape using a ship (e.g., the above described ship 6) or an anchor (e.g., the above described anchor 20).

According to the above method for disassembling an offshore structure (2), it is possible to suppress movement of the structure having a sheet shape in response to wind, wave, or the like, and thus it is possible to receive and recover the body of the offshore structure collapsed in the collapsing step with the structure having a sheet shape appropriately.

(3) In some embodiments, the above method for disassembling an offshore structure (1) or (2) further includes a step of setting an oil fence (e.g., the above described oil fence 22) so as to surround the structure having a sheet shape before the collapsing step.

According to the method for disassembling an offshore structure according to the above (3), it is possible to recover oil with the oil fence even if the oil inside the offshore structure scatters or leaks when and after the body of the offshore structure is collapsed, and thus it is possible to suppress ocean pollution.

(4) In some embodiments, in any one of the above methods for disassembling an offshore structure (1) to (3), the structure having a sheet shape to be set in the setting step has a smaller specific gravity than a specific gravity of sea water.

According to the method for disassembling an offshore structure described in the above (4), it is possible to utilize buoyancy of the structure having a sheet shape to prevent the body of the offshore structure from sinking under the sea, which makes recovery of the offshore structure easier.

(5) In some embodiments, in any one of the above methods for disassembling an offshore structure (1) to (4), a float (e.g., the above described float 28) is attached to the structure having a sheet shape to be set in the setting step.

According to the method for disassembling an offshore structure described in the above (5), it is possible to utilize buoyancy of the float to prevent the body of the offshore structure from sinking under the sea, which makes recovery of the offshore structure easier.

(6) In some embodiments, in any one of the above methods for disassembling an offshore structure (1) to (5), the transportation step includes transporting the structure having a sheet shape in a folded state, and the setting step includes expanding the structure having a sheet shape in a folded state and setting the same beside the tower.

According to the method for disassembling an offshore structure described in the above (6), the structure having a sheet shape in a folded state is transported in the transportation step, which facilitates transportation of the structure having a sheet shape in the transportation step. Furthermore, the structure having a sheet shape in a folded state is expanded and set beside the tower in the setting step, which makes it possible to address to disassembling of a large-scale offshore structure.

(7) In some embodiments, in any one of the above methods for disassembling an offshore structure (1) to (6), the recovery step includes towing the structure having a sheet shape on which the body of the offshore structure is loaded to land, and hoisting the body of the offshore structure up to the land.

According to the method for disassembling an offshore structure described in the above (7), it is possible to recover the body of the offshore structure to the land safely.

(8) In some embodiments, in any one of the above methods for disassembling an offshore structure (1) to (7), the collapsing step includes: a first irradiation step of irradiating the tower with a laser (e.g., the above described laser a1) from a first side of the tower in a horizontal direction so as not to penetrate the tower to form a first incision (e.g., the above described first incision C1) on the tower; a second irradiation step of irradiating the tower with a laser (e.g., the above described laser a2) at an angle different from that of the first incision from the first side of the tower in the horizontal direction so as not to penetrate the tower to form a second incision (e.g., the above described second incision C2) connecting to the first incision on the tower; and a third irradiation step of irradiating the tower with a laser (e.g., the above described laser a3) from a second side opposite to the first side of the tower in the horizontal direction to form a third incision (e.g., the above described third incision C3) connecting to at least one of the first incision or the second incision.

According to the method for disassembling an offshore structure described in the above (8), it is possible to collapse the body of the offshore structure toward the structure having a sheet shape without pulling the tower with a ship. Thus, it is possible to recover the body of the offshore structure easily and safely using the structure having a sheet shape.

(9) In some embodiments, in the above method for disassembling an offshore structure (8), the collapsing step includes cutting the tower while pulling the tower in two directions which are different from one another (e.g., the above described directions g1 and g2).

According to the method for disassembling an offshore structure described in the above (9), by cutting the tower while pulling the tower in the two different directions with an appropriate force, it is possible to collapse the body of the offshore structure in the intended direction between the two different directions. Thus, it is possible to recover the body of the offshore structure easily using the structure having a sheet shape.

(10) In some embodiments, in any one of the above methods for disassembling an offshore structure (1) to (9), the structure having a sheet shape comprises an oil adsorbent material (e.g., the above described polypropylene) which adsorbs oil.

According to the method for disassembling an offshore structure according to the above (10), it is possible to recover oil with the structure having a sheet shape formed of an oil adsorption material even if the oil inside the offshore structure scatters or leaks after the body of the offshore structure is collapsed, and thus it is possible to suppress ocean pollution.

(11) In some embodiments, in any one of the above methods for disassembling an offshore structure (1) to (10), the offshore structure is a wind turbine (e.g., the above described wind turbine 2), and the collapsing step includes collapsing a body of the wind turbine in the direction of a front side or a back side of the body of the wind turbine.

According to the method for disassembling an offshore structure described in the above (11), by collapsing the body of the wind turbine in the direction of the front side or the back side of the body of the wind turbine, it is possible to suppress breakage of the structure having a sheet shape due to the blades of the wind turbine.

(12) In some embodiments, any one of the above methods for disassembling an offshore structure (1) to (11) includes a step of providing a lid member (e.g., the above described lid member 39) for limiting intrusion of seawater into the tower on each of a root part (e.g., the above described root part 8r) of the tower and a tip part (e.g., the above described tip part 8t) of the tower before the collapsing step.

According to the method for disassembling an offshore structure described in the above (12), when the tower is cut and the body of the offshore structure is collapsed in the collapsing step, it is possible to suppress escape of air from the inside of the tower due to intrusion of sea water to the inside of the tower to allow the tower to float on the sea water more easily. Thus, it is possible to make the body of the offshore structure less likely to sink under the sea water, and to reduce the buoyancy required for the structure having a sheet shape and the float to let the body of the offshore structure float on the sea water. Furthermore, it is possible to suppress scattering or leakage of oil or dust or the like inside the tower of the wind turbine to the outside of the tower.

(13) In some embodiments, in any one of the above methods for disassembling an offshore structure (1) to (12), the structure having a sheet shape has a membrane shape.

According to the method for disassembling an offshore structure described in the above (13), it is possible to prevent the body of the offshore structure from sinking under the sea by using the structure having a membrane shape and recover the body of the offshore structure. Furthermore, since the tower is cut off and the body of the offshore structure is collapsed toward the structure having a membrane shape, it is possible to reduce the amount of high place works compared to a case where the offshore structure is disassembled in high place works by setting up scaffolds around the tower, and thus it is possible to disassemble and recover the offshore structure safely.

(14) In some embodiments, in any one of the above methods for disassembling an offshore structure (1) to (12), the structure having a sheet shape has a net shape.

According to the method for disassembling an offshore structure described in the above (14), it is possible to prevent the body of the offshore structure from sinking under the sea by using the structure having a net shape and recovering the body of the offshore structure. Furthermore, since the tower is cut off and the body of the offshore structure is collapsed toward the structure having a net shape, it is possible to reduce the amount of high place works compared to a case where the offshore structure is disassembled in high place works by setting up scaffolds around the tower, and thus it is possible to disassemble and recover the offshore structure safely.

(15) In some embodiments, in any one of the above methods for disassembling an offshore structure (1) to (14), the setting step includes setting the structure having a sheet shape so as to surround the tower.

According to the method for disassembling an offshore structure described in the above (15), it is possible to accommodate the body of the offshore structure inside the structure having a sheet shape regardless of the direction in which the tower collapses. Thus, it is possible to prevent the body of the offshore structure from sinking under the sea more reliably by using the structure having a sheet shape.

## Claims

1. A method for disassembling an offshore structure, the method comprising: a transportation step (S101) of transporting a structure (4) having a sheet shape toward a tower (2A) of the offshore structure; a setting step (S102) of setting the structure having a sheet shape (4) on the sea surface beside the tower (2A); a collapsing step (S103) of cutting the tower (2A) and collapsing a body of the offshore structure toward the structure having a sheet shape (4); and a recovery step (S104) of recovering the body of the offshore structure by using said structure having a sheet shape (4), wherein the structure having a sheet shape (4) is a sheet or a net and is foldable.

2. The method for disassembling an offshore structure according to claim 1, wherein the setting step (S102) includes fixing the structure having a sheet shape (4) while applying tension to the structure having a sheet shape (4) using a ship or an anchor.

3. The method for disassembling an offshore structure according to claim 1 or 2, the method further comprising: a step of setting an oil fence (22) so as to surround the structure having a sheet shape (4) before the collapsing step (S103).

4. The method for disassembling an offshore structure according to any one of claims 1 to 3,
wherein the structure having a sheet shape (4) to be set in the setting step has a smaller specific gravity than a specific gravity of sea water.

5. The method for disassembling an offshore structure according to any one of claims 1 to 4, wherein a float (28) is attached to the structure having a sheet shape (4) to be set in the setting step.

6. The method for disassembling an offshore structure according to any one of claims 1 to 5,
wherein the transportation step (S101) includes transporting the structure having a sheet shape in a folded state, and
wherein the setting step (S102) includes expanding the structure having a sheet shape in a folded state and setting the same beside the tower (2A).

7. The method for disassembling an offshore structure according to any one of claims 1 to 6,
wherein the recovery step (S104) includes towing the structure having a sheet shape (4) on which the body of the offshore structure is loaded to land, and hoisting the body of the offshore structure up to the land.

8. The method for disassembling an offshore structure according to any one of claims 1 to 7, wherein the collapsing step (S103) includes: a first irradiation step of irradiating the tower with a laser from a first side of the tower in a horizontal direction so as not to penetrate the tower (2A) to form a first incision on the tower;
a second irradiation step of irradiating the tower (2A) with a laser at an angle different from that of the first incision from the first side of the tower in the horizontal direction so as not to penetrate the tower to form a second incision connecting to the first incision on the tower; and
a third irradiation step of irradiating the tower (2A) with a laser from a second side opposite to the first side of the tower in the horizontal direction to form a third incision connecting to at least one of the first incision or the second incision.

9. The method for disassembling an offshore structure according to claim 8, wherein the collapsing step (S103) includes cutting the tower (2A) while pulling the tower in two directions which are different from one another.

10. The method for disassembling an offshore structure according to any one of claims 1 to 9, wherein the structure having a sheet shape (4) comprises an oil adsorbent material which adsorbs oil.

11. The method for disassembling an offshore structure according to any one of claims 1 to 10, wherein the offshore structure is a wind turbine (2), and wherein the collapsing step includes collapsing a body of the wind turbine (2) in the direction of a front side or a back side of the body of the wind turbine (2).

12. The method for disassembling an offshore structure according to any one of claims 1 to 11, further comprising: a step of providing a lid member (39) for limiting intrusion of seawater into the tower on each of a root part (8r) of the tower and a tip part (8t) of the tower before the collapsing step.

13. The method for disassembling an offshore structure according to any one of claims 1 to 12, wherein the structure having a sheet (4) shape has a membrane shape.

14. The method for disassembling an offshore structure according to any one of claims 1 to 12, wherein the structure having a sheet shape (4) has a net shape.

15. The method for disassembling an offshore structure according to claim 14, wherein the setting step (S102) includes setting the structure having a sheet shape (4) so as to surround the tower (2A).

## Patentansprüche

1. Verfahren zum Zerlegen einer Offshore-Struktur, wobei das Verfahren umfasst: einen Transportschritt (S101) zum Transportieren einer Struktur (4) mit einer Plattenform zu einem Turm (2A) der Offshore-Struktur; einen Setzschritt (S102) zum Setzen der Struktur mit einer Plattenform (4) auf der Meeresoberfläche neben dem Turm (2A); einen Kollabierschritt (S103) zum Schneiden des Turms (2A) und zum Kollabieren eines Körpers der Offshore-Struktur in Richtung der Struktur mit einer Plattenform (4); und einen Bergungsschritt (S104) zum Bergen des Körpers der Offshore-Struktur unter Verwendung der Struktur mit einer Plattenform (4), wobei die Struktur mit einer Plattenform (4) eine Platte oder ein Netz ist und faltbar ist.

2. Verfahren zum Zerlegen einer Offshore-Struktur nach Anspruch 1, wobei der Setzschritt (S102) das Fixieren der Struktur mit einer Plattenform (4) einschließt, während Spannung auf die Struktur mit einer Plattenform (4) unter Verwendung eines Schiffes oder eines Ankers aufgebracht wird.

3. Verfahren zum Zerlegen einer Offshore-Struktur nach Anspruch 1 oder 2, wobei das Verfahren ferner umfasst: einen Schritt zum Setzen eines Ölzauns (22), um die Struktur mit einer Plattenform (4) vor dem Kollabierschritt (S103) zu umgeben.

4. Verfahren zum Zerlegen einer Offshore-Struktur nach einem der Ansprüche 1 bis 3,
wobei die Struktur mit einer Plattenform (4), die in dem Setzschritt gesetzt werden soll, ein geringeres spezifisches Gewicht als ein spezifisches Gewicht von Meerwasser aufweist.

5. Verfahren zum Zerlegen einer Offshore-Struktur nach einem der Ansprüche 1 bis 4, wobei ein Schwimmer (28) an der Struktur mit einer Plattenform (4) befestigt wird, die im Setzschritt zu setzen ist.

6. Verfahren zum Zerlegen einer Offshore-Struktur nach einem der Ansprüche 1 bis 5,
wobei der Transportschritt (S101) das Transportieren der Struktur mit einer Plattenform in einem gefalteten Zustand einschließt, und
wobei der Setzschritt (S102) das Expandieren der Struktur mit einer Plattenform in einem gefalteten Zustand und das Setzen derselben neben dem Turm (2A) einschließt.

7. Verfahren zum Zerlegen einer Offshore-Struktur nach einem der Ansprüche 1 bis 6,
wobei der Bergungsschritt (S104) das Schleppen der Struktur mit einer Plattenform (4), auf der der Körper der Offshore-Struktur geladen ist, zum Land und das Hochziehen des Körpers der Offshore-Struktur bis zum Land einschließt.

8. Verfahren zum Zerlegen einer Offshore-Struktur nach einem der Ansprüche 1 bis 7, wobei der Kollabierschritt (S103) einschließt:
einen ersten Bestrahlungsschritt, bei dem der Turm von einer ersten Seite des Turms aus in einer horizontalen Richtung mit einem Laser bestrahlt wird, so dass der Turm nicht durchdrungen wird (2A), um einen ersten Einschnitt in den Turm zu bilden;
einen zweiten Bestrahlungsschritt, bei dem der Turm (2A) von der ersten Seite des Turms aus in der horizontalen Richtung mit einem Laser in einem Winkel bestrahlt wird, der sich von dem des ersten Einschnitts unterscheidet, so dass der Turm nicht durchdrungen wird, um einen zweiten Einschnitt zu bilden, der sich mit dem ersten Einschnitt am Turm verbindet; und
einen dritten Bestrahlungsschritt, bei dem der Turm (2A) von einer zweiten Seite aus, die der ersten Seite des Turms gegenüberliegt, in der horizontalen Richtung mit einem Laser bestrahlt wird, um einen dritten Einschnitt zu bilden, der sich mit dem ersten und/oder dem zweiten Einschnitt verbindet.

9. Verfahren zum Zerlegen einer Offshore-Struktur nach Anspruch 8, wobei der Kollabierschritt (S103) das Schneiden des Turms (2A) einschließt, während der Turm in zwei Richtungen gezogen wird, die sich voneinander unterscheiden.

10. Verfahren zum Zerlegen einer Offshore-Struktur nach einem der Ansprüche 1 bis 9, wobei die Struktur mit einer Plattenform (4) ein Öl adsorbierendes Material umfasst, das Öl adsorbiert.

11. Verfahren zum Zerlegen einer Offshore-Struktur nach einem der Ansprüche 1 bis 10, wobei die Offshore-Struktur eine Windturbine (2) ist und wobei der Kollabierschritt das Kollabieren eines Körpers der Windturbine (2) in Richtung einer Vorderseite oder einer Rückseite des Körpers der Windturbine (2) einschließt.

12. Verfahren zum Zerlegen einer Offshore-Struktur nach einem der Ansprüche 1 bis 11, ferner umfassend: einen Schritt zum Bereitstellen eines Deckelelements (39) zum Begrenzen der Eindringung von Meerwasser in den Turm an einem Wurzelteil (8r) des Turms und/oder einem Spitzenteil (8t) des Turms vor dem Kollabierschritt.

13. Verfahren zum Zerlegen einer Offshore-Struktur nach einem der Ansprüche 1 bis 12, wobei die Struktur mit einer Plattenform (4) eine Membranform aufweist.

14. Verfahren zum Zerlegen einer Offshore-Struktur nach einem der Ansprüche 1 bis 12, wobei die Struktur mit einer Plattenform (4) eine Netzform aufweist.

15. Verfahren zum Zerlegen einer Offshore-Struktur nach Anspruch 14, wobei der Setzschritt (S102) das Setzen der Struktur mit einer Plattenform (4) einschließt, um den Turm (2A) zu umgeben.

## Revendications

1. Procédé de démontage d'une structure offshore, comprenant : une étape de transport (S101) d'une structure (4) ayant une forme de feuille vers une tour (2A) de la structure offshore ; une étape de mise en place (S102) consistant à mettre en place la structure ayant une forme de feuille (4) sur la surface de la mer à côté de la tour (2A) ; une étape d'effondrement (S103) consistant à couper la tour (2A) et à effondrer un corps de la structure offshore vers la structure ayant une forme de feuille (4) ; et une étape de récupération (S104) consistant à récupérer le corps de la structure offshore en utilisant ladite structure ayant une forme de feuille (4), dans laquelle la structure ayant une forme de feuille (4) est une feuille ou un filet et est pliable.

2. Procédé de démontage d'une structure offshore selon la revendication 1, dans lequel l'étape de mise en place (S102) inclut la fixation de la structure ayant une forme de feuille (4) tout en appliquant une tension à la structure ayant une forme de feuille (4) à l'aide d'un navire ou d'une ancre.

3. Procédé de démontage d'une structure offshore selon la revendication 1 ou 2, comprenant en outre : une étape de mise en place d'une barrière pétrolière (22) de manière à entourer la structure ayant une forme de feuille (4) avant l'étape d'effondrement (S103).

4. Procédé de démontage d'une structure offshore selon l'une des revendications 1 à 3,
dans lequel la structure ayant une forme de feuille (4) à mettre en place lors de l'étape de mise en place a une densité inférieure à la densité de l'eau de mer.

5. Procédé de démontage d'une structure offshore selon l'une des revendications 1 à 4, dans lequel un flotteur (28) est fixé à la structure ayant une forme de feuille (4) à mettre en place lors de l'étape de mise en place.

6. Procédé de démontage d'une structure offshore selon l'une des revendications 1 à 5,
dans lequel l'étape de transport (S101) inclut le transport de la structure ayant la forme d'une feuille à l'état plié, et
l'étape de mise en place (S102) inclut l'expansion de la structure ayant la forme d'une feuille à l'état plié et à la mettre en place à côté de la tour (2A).

7. Procédé de démontage d'une structure offshore selon l'une des revendications 1 à 6,
l'étape de récupération (S104) inclut le remorquage de la structure en forme de feuille (4) sur laquelle le corps de la structure offshore est chargé jusqu'à la terre, et à hisser le corps de la structure offshore jusqu'à la terre.

8. Procédé de démontage d'une structure offshore selon l'une quelconque des revendications 1 à 7, dans lequel l'étape d'effondrement (S103) inclut :
une première étape d'irradiation consistant à irradier la tour avec un laser à partir d'un premier côté de la tour dans une direction horizontale de manière à ne pas pénétrer dans la tour (2A) afin de former une première incision sur la tour ;
une deuxième étape d'irradiation consistant à irradier la tour (2A) avec un laser à un angle différent de celui de la première incision depuis le premier côté de la tour dans la direction horizontale de manière à ne pas pénétrer dans la tour pour former une deuxième incision reliée à la première incision sur la tour ; et
une troisième étape d'irradiation consistant à irradier la tour (2A) avec un laser à partir d'un deuxième côté opposé au premier côté de la tour dans la direction horizontale pour former une troisième incision reliée à au moins l'une de la première incision ou de la deuxième incision.

9. Procédé de démontage d'une structure offshore selon la revendication 8, dans lequel l'étape d'effondrement (S103) inclut la coupe de la tour (2A) tout en tirant la tour dans deux directions différentes l'une de l'autre.

10. Procédé de démontage d'une structure offshore selon l'une des revendications 1 à 9, dans lequel la structure ayant une forme de feuille (4) comprend un matériau adsorbant d'huile qui adsorbe l'huile.

11. Procédé de démontage d'une structure offshore selon l'une des revendications 1 à 10, dans laquelle la structure offshore est une éolienne (2), et dans laquelle l'étape d'effondrement inclut l'effondrement d'un corps de l'éolienne (2) dans la direction d'un côté avant ou d'un côté arrière du corps de l'éolienne (2).

12. Procédé de démontage d'une structure offshore selon l'une quelconque des revendications 1 à 11, comprenant en outre : une étape consistant à fournir un élément de couvercle (39) pour limiter l'intrusion d'eau de mer dans la tour sur chacune des parties (8r) de la tour et sur la partie (8t) de la pointe de la tour avant l'étape d'effondrement.

13. Procédé de démontage d'une structure offshore selon l'une des revendications 1 à 12, dans lequel la structure ayant la forme d'une feuille (4) a la forme d'une membrane.

14. Procédé de démontage d'une structure offshore selon l'une des revendications 1 à 12, dans lequel la structure ayant la forme d'une feuille (4) a une forme de filet.

15. Procédé de démontage d'une structure offshore selon la revendication 14, dans lequel l'étape de mise en place (S102) inclut la mise en place de la structure ayant une forme de feuille (4) de manière à entourer la tour (2A).
